**Europäisches Patentamt**

**European Patent Office**

**Office européen des brevets**

(19)

(11) **EP 1 552 965 A1**

(12) **EUROPEAN PATENT APPLICATION**
published in accordance with Art. 158(3) EPC

(43) Date of publication:
**13.07.2005 Bulletin 2005/28**

(51) Int Cl.⁷: **B60C 1/00**
// (B32B25/08, C08J5:12),
(C08L21/00, 101:00)

(21) Application number: **03792624.3**

(22) Date of filing: **04.07.2003**

(86) International application number:
**PCT/JP2003/008570**

(87) International publication number:
**WO 2004/018234 (04.03.2004 Gazette 2004/10)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **12.07.2002 JP 2002204296**

(71) Applicant: **Daicel-Degussa Ltd.
Tokyo 108-8230 (JP)**

(72) Inventor: **IKUTA, Toru 5-6-23, Nishiokamoto
Kobe-shi, Hyogo 658-0073 (JP)**

(74) Representative: **Grünecker, Kinkeldey,
Stockmair & Schwanhäusser Anwaltssozietät
Maximilianstrasse 58
80538 München (DE)**

(54) **RUBBER-REINFORCED STRUCTURE**

(57) A rubber-reinforced structure comprises a composite member comprising a resin member and a rubber member being directly bonded to the resin member without any adhesive, wherein the resin member and the rubber member form a tire. The composite member can be obtained by bringing a resin member into contact with an unvulcanized rubber composition in the following combination, and vulcanizing the unvulcanized rubber: (i) a combination of a rubber composition containing a radical-generating agent, and a resin composition containing a thermoplastic resin having at least two active atoms (a hydrogen atom or a sulfur atom) on the average per molecule, each atom having an orbital interaction energy coefficient S of not less than 0.006; (ii) a combination of a rubber composition containing a sulfur-containing vulcanizing agent or a radical-generating agent, and a resin composition containing a resin selected from a thermoplastic resin and a resin having a crosslinkable group; or (iii) a combination of a styrene-diene-series rubber composition containing a sulfur-containing vulcanizing agent or a rubber composition containing a radical-generating agent, and a resin composition containing a polyphenylene ether-series resin.

**Description**

TECHNICAL FIELD

The present invention relates to a rubber-reinforced structure (e.g. , a tire such as a run-flat tire) comprising a composite (or composite member) which comprises a resin and a rubber integrally bonded to the resin and is useful for reinforcing a tire body, and relates to a process for producing the same.

BACKGROUND ART

An adhering method for adhering a resin molded article to a rubber molded article by an adhesive is known as a process of integrally joining a resin molded element to a rubber molded element. However, the process using the adhesives not only complicates the process to cause a troublesome process-control with resulting in costly but also does not necessarily give a sufficient adhesive strength.

Meanwhile, a composite which comprises a resin and a rubber directly bonded to the resin has been proposed. For example, regarding a polyphenylene ether-rubber composite, Japanese Patent Application Laid-Open No. 204260/1986 (JP-61-204260A) discloses a process for producing a composite, which comprises heating a polyphenylene ether-series resin which may have a styrenic polymer or an additive together with a synthetic rubber comprising SBR, BR, IR, IIR or the like in the presence of the vulcanizing system. The literature also discloses that a double bond-containing rubber vulcanizable by sulfur is suitable as the rubber component, and that a sulfur-containing compound is used as a vulcanization-activating agent. Further, a comparative example (Table 2) of the literature discloses an example using a rubber composition comprising E-SBR or BR as the rubber component and a peroxide-containing vulcanizing agent or a sulfur-containing vulcanizing agent.

With respect to an ABS resin-rubber composite, Japanese Patent Application Laid-Open No. 301973/1993 (JP-5-301973A) discloses a process for producing a composite, which comprises laminating an ABS resin molded member and an unvulcanized-rubber sheet composed of a rubber component having a critical surface tension of 37 to 39 mN/m, and subsequently heating the laminated sheet for adhering integrally. Japanese Patent Application Laid-Open No. 124803/1997 (JP-9-124803A) proposes a process for producing a composite member, which comprises heating an acrylonitrile-containing thermoplastic resin (e.g., AS resin, ABS resin) and an acrylonitrile-containing rubber with intimately contacting each other. However, these processes markedly restrict species of resins and rubbers for combination because the adhesion depends on a compatibility between the thermoplastic resin and the rubber, and therefore the practical applications are much limited.

Referring to a polyamide-rubber composite, Japanese Patent Application Laid-Open No. 150439/1990 (JP-2-150439A), Japanese Patent Application Laid-Open No. 133631/1991 (JP-3-133631A) and Japanese Patent Application Laid-Open No. 138114/1991 (JP-3-138114A) propose a process for producing a composite, which comprises vulcanizing a polyamide-series resin and a rubber component in the presence of the vulcanizing system, wherein the rubber component comprises a carboxyl group-or an acid anhydride group-containing rubber, a peroxide, a vulcanization-activating agent (e.g., ethylene glycol dimethacrylate, triallyl isocyanurate), and an alkoxysilane compound. In these documents, a polyamide-series resin containing the larger number of a terminal amino group than that of a terminal carboxyl group is used as an aliphatic polyamide-series resin. Since these processes utilize a reaction between an amino group and a carboxyl group or an acid anhydride group, a combination of species of resins and rubbers is markedly restricted, and therefore it is difficult to obtain a resin/rubber composite in a wide combination of the resin and the rubber.

Japanese Patent Application Laid-Open No. 11013/1995 (JP-7-11013A) discloses a process for producing a composite member which comprises a polyamide and a vulcanized rubber firmly bonded to the polyamide, and the process comprises vulcanizing or crosslinking a rubber compound containing a peroxide-containing vulcanizing agent and a silane compound with contacting a polyamide molded article. The literature discloses that the rubber compound may contain, if necessary, a vulcanization-activating agent, and also discloses that, in a comparative example (Table 2), even if an EPDM rubber comprising a peroxide (perkadox 14/40) and butanediol dimethacrylate (BDMA) was vulcanized in contact with a polyamide-series resin, bonding between the resin and the rubber was not effected. Therefore, the composite member is hardly produced without an expensive silane compound.

Japanese Patent Application Laid-Open No. 156188/1996 (JP-8-156188A) proposes a process for producing a composite member, which comprises vulcanizing or crosslinking a carboxyl group- or an acid anhydride group-containing rubber member with contacting closely an epoxy group-containing resin member. However, since this process also uses a reaction between the epoxy group and the carboxyl group, a combined species of the resin and the rubber is markedly limited, and it is difficult to obtain composites widely.

Regarding a process for producing a polyester-rubber composite comprising a thermoplastic polyester as a hard component and a vulcanized rubber as a soft component, Japanese Patent Application Laid-Open No.

304880/1995 (JP-7-304880A) proposes a use of a rubber component comprising a rubber, a peroxide vulcanizing agent, a bi-or polyfunctional maleimide, and, if necessary, a vulcanization-activating agent, and Japanese Patent Application Laid-Open No. 166043/1995 (JP-7-166043A) proposes to use a rubber component comprising a rubber, a peroxide vulcanizing agent, a silane compound, and, if necessary, a vulcanization-activating agent. Further, concerning a composite film comprising a resin film and a rubber film, Japanese Patent Application Laid-Open No. 58605/1998 (JP-10-58605A) discloses a process for producing a composite sheet by laminating a rubber film (e.g., silicone rubber, ethylene-propylene-series rubber) comprising a polyfunctional methacrylate as an adhesion-improving agent on a substrate film (e.g., a polyester film), and vulcanizing or crosslinking the laminate. However, such processes cause difficulty for bonding the polyester to the rubber with a high adhesive strength.

Thus, conventional techniques require trial and error investigation for obtaining a high adhesive strength in a combination of a thermoplastic resin and a rubber, and it is difficult to obtain generally or universally a combination of a thermoplastic resin and a rubber to firmly bond each other.

Recently, a variety of special tires which are capable of driving even if a puncture on a car driving causes zero inflation pressure (hereinafter simply referred to as a run-flat tire) have been developed. As these tires, there have been known one having a reinforcing layer on the internal surface thereof (or side-reinforced type), or one having a support ring within the tire (or core type), or others. In each run-flat tire, a reinforcing member is used.

These reinforcing members comprise a rubber or a metal, or a composite, and are fixed on a tire body by a mechanical means or a chemical means (e.g., use of an adhesive, co-vulcanization). However, in the case of using a metal being heavy in weight or of reinforcing with only rubber member, an amount of the rubber to be used from the viewpoint of strength has to be increased in these methods. As a result, these methods are by no means free from significant increase in gross weight of a tire. As the measures, it is proposed that a resin be partially substituted for a metal member or rubber member. As mentioned above, however, in preparation of a composite of a rubber and a resin, there are many problems concerning adhesion, and there is a significant limit to the range of choice or freedom of combination in a resin member and a rubber member. In particular, it is substantially difficult to change a formula (or recipe) for a rubber of a tire body. Therefore, the resin member has a limitation on a kind thereof, and it is difficult to bond the resin member to the rubber member generally at high adhesive strength. For example, in a tire body using a sulfur-containing vulcanizing agent, it is usually difficult to improve adhesive strength to the resin member. Moreover, from the viewpoint of performance of the tire body, the range of choice in a formula of the resin composition for improving adhesive strength is severely limited in a formula of the rubber in which an additive such as a bulking agent, a filler or a plasticizer must be added too much or a formula of the rubber in which the kind of a vulcanizing agent is restricted (for example, a rubber recipe having need of a sulfur-containing vulcanizing agent).

It is therefore an object of the present invention to provide a rubber-reinforced structure (such as a tire) effectively reinforced with a resin member in a wide range of combination without using an adhesive, and a process for producing the same.

It is another object of the present invention to provide a rubber-reinforced structure (such as a tire) which comprises a tire (e.g., a rubber member) and a reinforcing member being firmly bonded to the tire, and a process for producing the same, wherein the reinforcing member comprises a resin, or a composite comprising a resin and a rubber being bonded to the resin.

DISCLOSURE OF THE INVENTION

The inventors of the present invention made intensive studies to achieve the above objects and finally found that (1) a resin having a specific active atom according to a molecular orbital method has highly active to a radical, and combination use of a resin having a plurality of such active atoms and an unvulcanized rubber universally insures direct adhesion in a wide range of combination of a resin and a rubber in accordance with vulcanization or crosslinking of the unvulcanized rubber; (2) use of a thermoplastic resin or thermosetting resin having a crosslinkable unsaturated bond makes it possible to directly bond a resin to a rubber with vulcanization or crosslinking of an unvulcanized rubber even when a vulcanizing agent is a sulfur-containing agent without limiting to a radical-generating agent, regardless of the existence of the above-mentioned active atoms; and (3) in combination of a polyphenylene ether-series resin and a styrene-diene-series rubber, a resin can be bonded to a rubber even if a vulcanizing agent for the rubber is either a radical-generating agent or a sulfur-containing vulcanizing agent. The present invention has been accomplished based on the above findings.

That is, the rubber-reinforced structure (or rubber-reinforced structural body) of the present invention comprises a composite which comprises at least one resin member comprising a resin composition, and a rubber member being directly bonded to the resin member without any adhesive, and the resin member and the rubber member form a tire. More specifically, the rubber-reinforced structure of the present invention comprises a resin member and at least one rubber member (or rubber layer) constituting the tire and being directly bonded to the resin member without any adhesive, wherein the rubber member and the resin member comprises the following combinations:

(i) a combination of a rubber member comprising a rubber composition vulcanized with a radical-generating agent, and a resin member comprising a thermoplastic resin (or a resin composition) having at least two active atoms on the average per molecule, and each of the atoms is selected from the group consisting of a hydrogen atom and a sulfur atom and has an orbital interaction energy coefficient S of not less than 0.006,
wherein the orbital interaction energy coefficient S is represented by the following formula (1):

$$S=(C_{HOMO,n})^2/|E_c-E_{HOMO,n}|+(C_{LUMO,n})^2/|E_c-E_{LUMO,n}| \qquad (1)$$

in the formula, each of factors, $E_c$, $C_{HOMO,n}$, $E_{HOMO,n}$, $C_{LUMO,n}$, and $E_{LUMO,n}$ represents a value calculated by a semiempirical molecular orbital method MOPACPM3, $E_c$ representing an orbital energy (eV) of a radical of the radical-generating agent as a vulcanizing agent, $C_{HOMO,n}$ representing a molecular-orbital coefficient of the highest occupied molecular orbital (HOMO) of an n-th active atom constituting a basic unit of the thermoplastic resin, $E_{HOMO,n}$ representing an orbital energy (eV) of the HOMO, $C_{LUMO,n}$ representing a molecular-orbital coefficient of the lowest unoccupied molecular orbital (LUMO) of the n-th active atom constituting the basic unit of the thermoplastic resin, and $E_{LUMO,n}$ representing an orbital energy (eV) of the LUMO;
(ii) a combination of a rubber member comprising a rubber composition vulcanized with a sulfur-containing vulcanizing agent or a radical-generating agent, and a resin member which comprises a resin (or a resin composition) comprising at least one member selected from the group consisting of a thermoplastic resin and a resin having a crosslinkable group; or
(iii) a combination of a rubber member comprising a styrene-diene-series rubber composition vulcanized with a sulfur-containing vulcanizing agent or a rubber composition vulcanized with a radical-generating agent, and a resin member comprising a polyphenylene ether-series resin composition.

The resin member may comprise a reinforcing layer of the tire, or may form an adhesive layer to at least one rubber layer or rubber member constituting the tire. Further, the resin member may be bonded to the rubber member through a vulcanized rubber layer vulcanized with a vulcanizing agent. Examples of the thermoplastic resin may include a polyamide-series resin (e.g., an aliphatic polyamide-series resin), a polyester-series resin (e.g., an aromatic polyester-series resin), a poly(thio)ether-series resin (e.g., a polyacetal-series resin, a polyphenylene ether-series resin, and a polysulfide-series resin), a polycarbonate-series resin, a polyimide-series resin, a polysulfone-series resin, a polyurethane-series resin, a polyolefinic resin, a halogen-containing vinyl-series resin, a styrenic resin, a (meth)acrylic resin, and a thermoplastic elastomer (e.g., a polyamide-series elastomer, a polyester-series elastomer, a polyurethane-series elastomer, a polystyrenic elastomer, and a polyolefinic elastomer). The resin having a crosslinkable group may comprise at least one member selected from the group consisting of a thermosetting resin, and a thermoplastic resin having an unsaturated bond.
The rubber vulcanizable with the radical-generating agent may comprise a diene-series rubber, an olefinic rubber, an acrylic rubber, a fluorine-containing rubber, a silicone-series rubber, a urethane-series rubber, and others. The radical-generating agent may be an organic peroxide, an azo compound, a sulfur-containing organic compound, and others.
At least one member selected from the group consisting of the rubber member and the resin member may be formed from a composition containing a vulcanization-activating agent (e.g., a compound having a plurality of polymerizable groups). The amount (or proportion) of the vulcanization-activating agent may be about 0.1 to 10 parts by weight relative to 100 parts by weight of the rubber or the resin. For example, the amount (or proportion) of the vulcanization-activating agent may be not more than 2 parts by weight relative to 100 parts by weight of the rubber.
The present invention includes a process for producing a rubber-reinforced structure, which comprises
bringing a resin element for forming a resin member into contact with at least one rubber element, wherein the resin element is selected from the group consisting of an unmolded resin composition, a semi-molded resin member and a molded resin member, the rubber element is selected from the group consisting of an unvulcanized rubber composition and a semi-vulcanized rubber member, and the resin member and the rubber element form a tire,
vulcanizing an unvulcanized rubber of the rubber element to bond the formed vulcanized rubber member to the resin member,
wherein the resin element and the rubber element are used in the following combinations:

(i) a combination of a rubber element containing a radical-generating agent, and a resin element containing a thermoplastic resin having at least two active atoms on the average per molecule, wherein each of the atoms is selected from the group consisting of a hydrogen atom and a sulfur atom and has an orbital interaction energy coefficient S represented by the formula (1) of not less than 0.006;

(ii) a combination of a rubber composition containing a sulfur-containing vulcanizing agent or a radical-generating agent, and a resin composition containing at least one resin selected from a thermoplastic resin and a resin having a crosslinkable group; or

(iii) a combination of a styrene-diene-series rubber composition containing a sulfur-containing vulcanizing agent or a rubber composition containing a radical-generating agent, and a resin composition containing a polyphenylene ether-series resin.

At least one element of the resin element and the rubber element may contain a vulcanization-activating agent. Moreover, the resin element may comprise a vulcanization auxiliary comprising a compound (e.g., a relatively low molecular weight compound having a molecular weight of not more than 1000) having at least two active atoms on the average per molecule, wherein each of the atoms is selected from the group consisting of a hydrogen atom and a sulfur atom and has an orbital interaction energy coefficient S represented by the formula (1) of not less than 0.006.

Further, in the bonding step, the resin element and the rubber element may be heat-molded with a vulcanization-activating agent (or a coating agent containing the vulcanization auxiliary) interposing therebetween to bond the formed resin member to the formed rubber member. Furthermore, the resin element and the rubber element may be heat-molded with a coating layer containing a vulcanization-activating agent and a vulcanization auxiliary interposing on the contact surface of the resin element with the rubber element to bond the formed resin member to the formed rubber member, wherein the vulcanization auxiliary comprises a compound (e.g., a relatively low molecular weight compound having a molecular weight of not more than 1000) having at least two active atoms on the average per molecule, wherein each of the atoms is selected from the group consisting of a hydrogen atom and a sulfur atom and has an orbital interaction energy coefficient S represented by the formula (1) of not less than 0.006.

Further, the present invention also includes a process for producing a rubber-reinforced structure, which comprises a step for bonding a resin member to at least one rubber element, wherein the resin member is selected from the group consisting of a semi-molded resin member and a molded resin member, the rubber element is selected from the group consisting of an unvulcanized rubber composition and a semi-vulcanized rubber member, and the resin member and the rubber element form a tire, and the bonding step comprises treating (coat-treating) the surface of the resin member with a solvent capable of dissolving or swelling the resin member, bringing the treated surface of the resin member into contact with the rubber element, and vulcanizing an unvulcanized rubber of the rubber component to bond the vulcanized and formed rubber member to the resin member. This process ensures high adhesiveness of the rubber member and the resin member, even if the resin member is treated, the solvent is removed and then the treated surface of the resin member is brought into contact with the unvulcanized composition.

These composites and production processes thereof are directly applicable for construction of a run-flat tire and a production process thereof. That is, the composites and the production processes of the present invention can be applied for a reinforcing layer of a run-flat tire or the like, for example, a reinforcing layer of an internal surface of a side-reinforced tire, or a support ring in a core type tire. Further, by utilizing the process for producing the composite of the present invention, the reinforcing layer can also be bonded to the rubber part of the tire body.

DETAILED DESCRIPTION OF THE INVENTION

[Resin member]

In the composite of the present invention, the resin member comprises at least one member selected from a thermoplastic resin and a crosslinkable group-containing resin (hereinafter, these resins may be simply referred to as resin).

(Thermoplastic resin)

As the thermoplastic resin, a resin having a plurality of hydrogen atoms (active hydrogen atoms) and/or sulfur atoms (active sulfur atoms) showing high activity to a radical-generating agent (hereinafter, the hydrogen atom and sulfur atom are occasionally referred to as an active atom) may be selected. That is, the thermoplastic resin may be selected depending on the species of a radical-generating agent, and for example, contains an active atom having an orbital interaction energy coefficient S represented by the following formula (1) of not less than the given value (e.g. , 0.006, and preferably 0.008). The preferred value of the orbital interaction energy coefficient S of the active atom is about 0.006 to 0.06, and preferably about 0.007 to 0.05 (in particular about 0.01 to 0.045). The number of the active atom depends on a bonding position or site of a functional group having the active atom (e.g., an end or terminal, a branched chain, or a main chain), and the number of the active atom per molecule of the thermoplastic resin may for example be not less than 2 (about 2 to 10000) on the average, preferably not less than 2.5 (about 2.5 to 5000) on the average, and more preferably not less than 3 (about 3 to 1000) on the average. The number of the active atom per molecule of the thermoplastic resin is usually about 2 to 100 (preferably about 2.5 to 50, more preferably about 3 to 25, and in particular about 3 to 20). In the case of selecting a thermoplastic resin satisfying such a condition, a crosslinking reaction on vulcanization of a rubber component proceeds in the contact surface (or interface) between the rubber component and the thermoplastic resin component, and the both components are firmly bonded to each other.

$$S=(C_{HOMO,n})^2/|E_c-E_{HOMO,n}|+(C_{LUMO,n})^2/|E_c-E_{LUMO,n}| \qquad (1)$$

wherein each of the factors, $E_c$, $C_{HOMO,n}$, $E_{HOMO,n}$, $C_{LUMO,n}$, and $E_{LUMO,n}$ represents a value calculated by the semiempirical molecular orbital method MOPACPM3, $E_c$ representing an orbital energy (eV) of a radical of a radical-generating agent; $C_{HOMO,n}$ representing a molecular-orbital coefficient of the highest occupied molecular orbital (HOMO) of an n-th hydrogen atom or sulfur atom constituting a basic (or constitutive) unit of the thermoplastic resin; $E_{HOMO,n}$ representing an orbital energy (eV) of the HOMO; $C_{LUMO,n}$ representing a molecular-orbital coefficient of the lowest unoccupied molecular orbital (LUMO) of the n-th hydrogen atom or sulfur atom constituting the basic unit of the thermoplastic resin; and $E_{LUMO,n}$ representing an orbital energy (eV) of the LUMO.

MOPACPM3 represented by the formula (1) is one of molecular orbital (MO) methods. The molecular orbital method is one of approximations for discussing an electron condition or state in a molecular, and is classified into three main methods; an empirical method such as Huckel's rule, a semiempirical method enhancing an approximation of the Huckel's rule, and an nonempirical method determining strictly a molecular orbital function by only calculation. In recent years, with developing a computer system, the semiempirical method and the nonempirical method are main methods. The molecular orbital method is a most convincible method correlating a molecular structure and chemical reactivity thereof. For example, when searching the term "molecular orbital method" as a keyword in JST Online Information System (JOIS), about 53000 of a registered number can be found (term : 1980 to 2000 May). The MOPACPM3 is the core of NDDO (Neglect of Diatomic Differential Overlap) method which is one of the semiempirical methods.

The MOPACPM3 is used for mainly studying a reaction of an organic compound, and is explained in many literatures and publications [e.g., "Molecular orbital method MOPAC guidebook" (Tsuneo Hirano, Kazutoshi Tanabe; Kaibundo, 1991), "Introduction to Quantum Chemistry, 3rd revised edition" (Teijiro Yonezawa et al., Kagaku Dojin, 1983), "Calculation Chemistry giudebook" (translated by Eiji Osawa et al., written by Tim Clark, Maruzen, 1985)].

A basic unit (or constitutive unit) in the formula (1) means a modeling molecular structure comprising a polymer terminal and about 1 to 3 repeating unit(s). That is, it is difficult to calculate a molecular orbital for a polymer compound itself by MOPACPM3, since the polymer compound has too much numbers of atoms per molecule. Therefore, a calculation may be carried out for a modeling molecular structure (a constitutive unit or basic unit) comprising a polymer terminal and about 2 to 3 repeating units. For example, a molecular structure (repeating unit) of polybutylene terephthalate (PBT) is generally represented by a chemical formula "$-(CH_2-CH_2-CH_2-CH_2-O-C(=O)-C_6H_4-C(=O)-O)_n-$", and the calculation of a molecular orbital in the formula (1) may be conducted for "$HO-CH_2-CH_2-CH_2-CH_2-O-C(=O)-C_6H_4-C(=O)-OH$" as a basic unit.

The orbital interaction energy coefficient S represented by the formula (1) may be referred to as a reactive index, and is defined and explained in various publications. When a chemical reactivity is discussed, the orbital interaction energy coefficient S is used as a parameter for the chemical reactivity in general. For example, "Introduction of Frontier orbital theory" (p. 72, Shinichi Yamabe, Satoshi Inagaki, Kodansha Scientific, 1989) describes that an orbital interaction energy coefficient S indicates a concept "Regarding to an interaction between two orbits, (a) a smaller energy difference between two orbits and (b) a larger overlap between two orbits make the interaction stronger". The formula (1) is based upon an idea of superdelocalizability (Sr) published in 1954 by late Dr. Fukui given a Nobel prize (see "To use a molecular orbital method" , p. 71, Minoru Imoto , Kagaku Dojin, 1986), a formula similar to the formula (1) is derived from the concept of Sr on various publications and literatures.

Hereupon, it is important that the molecular orbital method is already widely known for discussion of a molecular structure and chemical reactivity thereof. Therefore, an orbital interaction energy coefficient S (1/eV) defined by the following formula (1) does not represent a mere conceptual value, and represents a value meaning a parameter or properties of a material (e.g., a molecular weight, a functional group) for determination of the material.

Incidentally, the radical orbital energy $E_C$ (eV) of a radical-generating agent is preferably calculated based on a radical molecular structure with the use of MOPACPM3, and a predetermined value based on a species of the radical-generating agent may be used for convenience. For example, the $E_C$ value of the radical-generating agent may be -8 eV for an organic peroxide, -5 eV for an azo compound, and -6 eV for a sulfur-containing organic compound excluding a sulfur.

As the hydrogen atom having not less than a predetermined value (e.g., 0.006) of an orbital interaction energy coefficient S (an active hydrogen atom), in the case where the radical-generating agent comprises an organic peroxide, there may be mentioned, for example, a hydrogen atom constituting an amino group ($-NH_2$) (e.g., a terminal amino group), an imino group (-NH-) (e.g., a main-chain or terminal imino group, -NH- of an amide bond), a mercapto group (-SH), a methyl group (-CH$_3$), a methylene group (-CH$_2$-) (a methylene group adjacent to an electron-attracting group, that is an active methylene group), or a methylidyne group (-CH=) (a main-chain or terminal methylidyne group).

As the sulfur atom having not less than a given value (e.g., 0.006) of an orbital interaction energy coefficient S (an active sulfur atom), in the case where the radical-generating agent comprises an organic peroxide, there may be mentioned, for example, a sulfur atom constituting a thio group (-S-), a mercapto group (-SH), an alkylthio group (e.g., a C$_{1-4}$alkylthio group such as a methylthio group, or an ethylthio group), or a sulfinyl group (-SO-).

The methyl group includes, for example, a methyl group bonding to an alkylene chain, a cycloalkylene chain, or an aromatic ring; a methyl group bonding to an oxygen atom (e.g., a methyl group in a methoxy group). The methylene group may include, for example, a methylene group adjacent to an oxygen atom of a (poly)oxyalkylene unit such as a (poly)oxymethylene unit or a (poly)oxyethylene unit, additionally, a methylene group adjacent to a nitrogen atom of an amino group or an imino group. The methylidyne group includes, for example, an α-positioned methylidyne group adjacent to an amino group or an imino group, such as a methylidyne group α-positioned to an amino group in an aminocycloalkyl group.

It is sufficient that a thermoplastic resin has plural (e.g., not less than 2) active atoms on the average per molecule. That is, usually the thermoplastic resin is not constituted by a single molecule, and comprises a mixture of numerous molecules being somewhat different in a structure and a chain length. Therefore, all molecules of the thermoplastic resin are not required essentially to have a plurality of active atoms, and the number of an active atom on the average per molecule is to be not less than 2 in calculating a plurality of predictable predominant constitutive or basic units. For example, the number of an active hydrogen atom constituting a polymer having a repeating unit -(NH-(CH$_2$)$_6$-NH-C(=O)-(CH$_2$)$_4$-(C=O))$_n$- (polyamide 66) may be calculated based on a modeling basic unit NH$_2$-(CH$_2$)$_6$-NH-C(=O)-(CH$_2$)$_4$-C(=O)-OH, and when a radical-generating agent comprises an organic peroxide, two hydrogen atoms of a terminal NH$_2$ group comprise an active hydrogen atom (that is, S is not less than 0.006). In this case, the average number N of an active hydrogen atom per polyamide 66 molecule may be calculated with the use of the following formula (2) from a ratio of a terminal NH$_2$ group and a terminal COOH group in the polymer (polyamide 66) as an aggregate;

$$N = 2 \times A \tag{2}$$

wherein "A" represents the average number of a terminal NH$_2$ group per molecule.

For example, in a ratio of a terminal NH$_2$ group/terminal COOH group=1/1 (molar ratio) in the resin, the number "A" of the terminal NH$_2$ group per molecule is 1, and the number "N" of the active hydrogen atom per molecule is equal to 2. Moreover, in 1/2 (molar ratio) of terminal NH$_2$ group /terminal COOH group, the number "A" of the terminal NH$_2$ group per molecule shows 2/3, and the number "N" of the active hydrogen atom per molecule is 4/3.

Incidentally, in the case where the thermoplastic resin is a mixed resin comprising a plurality of resins which are different from each other in the number of active atoms, the number of active atoms in the mixed resin may be represented by the average number of active atoms in each resin. That is, the apparent number of active atoms in the mixed resin can be estimated by calculating the number of active atoms individually based on a basic unit for each resin constituting the mixed resin, and averaging the calculated number of the active atom according to a proportion (weight ratio) of each resin. For example, when the mixed resin comprises (A) the above mentioned polyamide 66 (N=2) and (B) the above mentioned polyamide 66 (N=4/3), and the ratio of (A)/(B) is 1/1 (weight ratio), the number "N" of the active atom per molecule of the mixed resin can be counted as 5/3. Moreover, when the mixed resin comprises (A) the above mentioned polyamide 66 (N=2) and (C) a polyamide 66 having carboxyl group as all terminal groups (N=0) and the ratio of (A)/(C) is 3/1 (weight ratio), the number "N" of the active atom per molecule of the mixed resin can be counted as 3/2.

The thermoplastic resin is not particularly restricted as far as there are a plurality of active atoms per molecule, and includes broad variety of resins, for example, a polyamide-series resin, a polyester-series resin, a poly(thio)ether-series resin (e.g., a polyacetal-series resin, a polyphenylene ether-series resin, a polysulfide-series resin), a polyolefinic resin, a polyurethane resin, a thermoplastic elastomer. Moreover, even a resin not containing the plurality of active atoms mentioned above can be modified to a thermoplastic resin capable of firmly bonding to a rubber member by introducing an active atom into the resin. These thermoplastic resins may be used singly or in combination. In the case that two or more thermoplastic resins are used in combination, a resin composition may be a mixed- or compounded-resin composition such as a polymer alloy.

Incidentally, the molecular weight of the thermoplastic resin is not particularly restricted. Even if a polymer having the plural active atoms in the molecule, the concentration of the active atom in the polymer relatively decreases with increasing in a molecular weight of the polymer to lower the crosslinking rate or crosslinking density between a resin and a rubber. As a result, contribution of the active atom to a bonding of the members deteriorates sometimes.

Therefore, a resin having a low molecular weight is advantageous for bonding to a rubber. In the present invention, a number-average molecular weight of a resin is usually about 3000 to 400000, preferably about 5000 to 100000, and more preferably about 5000 to 50000, for example, about 8000 to 20000.

(1) Polyamide-series resin

As the polyamide-series resin, there may be mentioned an aliphatic polyamide-series resin, an alicyclic polyamide-series resin, and an aromatic polyamide-series resin, and there is usually employed an aliphatic polyamide-series resin. The aliphatic polyamide-series resin includes a condensed compound of an aliphatic diamine component (e.g., a $C_{4-10}$ alkylene diamine such as tetramethylenediamine, or hexamethylenediamine) and an aliphatic dicarboxylic acid component (e.g., an alkylene dicarboxylic acid having about 4 to 20 carbon atoms such as adipic acid, sebacic acid or dodecanedioic acid), for example, a polyamide 46, a polyamide 66, a polyamide 610, a polyamide 612 and so on; a homopolymer or a copolymer of a lactam (e.g., a lactam having about 4 to 20 carbon atoms such as ε-caprolactam or ω-laurolactam) or a homopolymer or a copolymer of an aminocarboxylic acid (e.g., an aminocarboxylic acid having about 4 to 20 carbon atoms such as ω-aminoundecanoic acid), for example, a polyamide 6, a polyamide 11, a polyamide 12 and so on; a copolyamide obtained by copolymerizing these polyamide components (e.g., a polyamide 6/11, a polyamide 6/12, a polyamide 66/11, a polyamide 66/12) and the like.

As the alicyclic polyamide-series resin, there may be exemplified a polyamide in which an alicyclic diamine and/or an alicyclic dicarboxylic acid replaces at least part of the aliphatic diamine component and/or the aliphatic dicarboxylic acid component. The alicyclic polyamide includes, for example, a condensed compound of the aliphatic dicarboxylic acid component and the alicyclic diamine component [for example, a $C_{5-8}$ cycloalkyl diamine such as cyclohexyl diamine; a bis(amino $C_{5-8}$ cycloalkyl)alkane (e.g., a bis(aminocyclohexyl)alkane such as bis(aminocyclohexyl) methane or 2,2-bis(aminocyclohexyl)propane)].

As the aromatic polyamide-series resin, there may be mentioned, a polyamide in which at least one component among the aliphatic diamine components and the aliphatic dicarboxylic acid components comprises an aromatic component, for example, a polyamide in which the diamine component is substituted for an aromatic component [e.g., a condensed compound of an aromatic diamine (e.g., meta-xylylenediamine) such as MXD-6 and an aliphatic dicarboxylic acid]; a polyamide in which the dicarboxylic acid component comprises an aromatic component [e.g., a condensed compound of an aliphatic diamine (e.g., trimethylhexamethylenediamine) and an aromatic dicarboxylic acid (e.g., terephthalic acid, isophthalic acid)]; a polyamide in which both the diamine component and the dicarboxylic acid component comprise an aromatic component [e.g., a fully aromatic polyamide such as a poly(m-phenyleneisophthalamide) (e.g., Aramid)], and others.

The polyamide-series resin further includes a polyamide comprising a dimeric acid as the dicarboxylic acid component, a polyamide having a branched structure by introducing a small amount of a polyfunctional polyamine and/or a polycarboxylic acid component, a modified polyamide (e.g., an N-alkoxymethylpolyamide).

In the polyamide-series resin, an active hydrogen atom includes, for example, a hydrogen atom of a terminal amino group, a hydrogen atom bonding to an α-positioned carbon atom relative to a terminal amino group, a hydrogen atom bonding to a carbon atom adjacent to a group -NH- of an amide bond (e.g., a hydrogen atom of a methylene group, a hydrogen atom of a methylidyne group), in particular the hydrogen atom of the terminal amino group.

In the polyamide-series resin, the proportion of a terminal $NH_2$ group relative to a terminal COOH group is not particularly restricted, and may for example be selected from the range of about 10/90 to 100/0, preferably about 20/80 to 100/0, and more preferably about 25/75 to 100/0 as a molar ratio of terminal amino group/terminal carboxyl group, when the active hydrogen atom comprises a hydrogen atom of the terminal amino group and a hydrogen atom bonding to the α-positioned carbon atom. Moreover, in the case where the active hydrogen atom comprises only hydrogen atoms of the terminal amino group, the ratio (molar ratio) of terminal amino group/terminal carboxyl group, may be about 50/50 to 100/0, preferably about 60/40 to 100/0, and more preferably about 70/30 to 100/0.

(2) Polyester-series resin

The polyester-series resin may be an aliphatic polyester-series resin, and is usually an aromatic polyester-series resin, for example, a polyalkylene arylate-series resin or a saturated aromatic polyester-series resin. The aromatic polyester-series resin includes, for example, a poly $C_{2-4}$ alkylene terephthalate such as a polyethylene terephthalate (PET) or a polybutylene terephthalate (PBT); a poly $C_{2-4}$ alkylene naphthalate corresponding to the polyalkylene terephthalate (e.g., a polyethylene naphthalate); a poly(1,4-cyclohexyldimethylene terephthalate) (PCT). The polyester-series resin may be a copolyester comprising an alkylene arylate unit as a predominant or main component (e.g., not less than 50% by weight). A copolymerizable component of the copolyester includes a $C_{2-6}$ alkylene glycol such as ethylene glycol, propylene glycol, butanediol, or hexanediol; a (poly)oxy $C_{2-4}$ alkylene glycol; an asymmetrical aromatic dicarboxylic acid such as phthalic acid or isophthalic acid, or an acid anhydride thereof; and a $C_{6-12}$ aliphatic dicarboxylic

acid such as adipic acid. Moreover, a branched structure may be introduced into a linear polyester by using or modifying with small amounts of a polyol and/or a polycarboxylic acid. In the case where the aromatic polyester-series resin does not have a predetermined concentration of the active atom(s), a modified polyester-series resin altered by a modifying compound having the active atom(s) (e.g., an aromatic polyester-series resin having at least one member selected from an amino group and an oxyalkylene group) may be used. As the compound having the active atom(s), in particular, an active hydrogen atom, there may be mentioned, for example, a polyamine [e.g., an aliphatic diamine such as a linear- or branched-alkylenediamine having about 2 to 10 carbon atoms, e.g., ethylenediamine, trimethylenediamine, propylenediamine, tetramethylenediamine, pentamethylenediamine, hexamethylenediamine, trimethylhexamethylenediamine, 1,7-diaminoheptane, or 1,8-diaminooctane; an alicyclic diamine such as isophorone diamine, bis(4-amino-3-methylcyclohexyl) methane, or bis(aminomethyl) cyclohexane; and an aromatic diamine such as phenylenediamine, xylylenediamine, or diaminodiphenylmethane]; and a polyol [e.g., a $C_{2-6}$ alkylene glycol such as ethylene glycol, propylene glycol, butanediol, or hexanediol, a (poly)oxy$C_{2-4}$alkylene glycol such as a (poly)oxyethylene glycol, a (poly) oxytrimethylene glycol, a (poly)oxypropylene glycol, or a (poly)oxytetramethylene glycol]. The modification may be conducted by, for example, heating a mixture of a polyester-series resin and the modifying compound to cause an amidation, an esterification or a transesterification reaction. The degree of the modification of the polyester-series resin may depend on an amount of the active hydrogen atom(s) in the compound, and may for example be about 0.1 to 2 mol, preferably about 0.2 to 1.5 mol, and more preferably about 0.3 to 1 mol of the modifying compound relative to 1 mol of a functional group (a hydroxyl group or a carboxyl group) of the polyester-series resin. In the transesterification reaction, the amount of the polyol may be about 1 to 50 parts by weight, and preferably about 5 to 30 parts by weight relative to 100 parts by weight of the polyester-series resin.

In the polyester-series resin, the active hydrogen atom usually comprises a hydrogen atom of a methylene group adjacent to an oxygen atom of a (poly)oxyalkylene unit. In the modified polyester-series resin, an active hydrogen atom usually comprises a hydrogen atom of a terminal amino group, a hydrogen atom bonding to an α-positioned carbon atom relative to a terminal amino group, a hydrogen atom bonding to a carbon atom adjacent to an -NH- group of an amide bond (e.g., a hydrogen atom of a methylene group, a hydrogen atom of a methylidyne group), and in particular the hydrogen atom of a terminal amino group.

(3) Poly(thio)ether-series resin

The poly(thio)ether-series resin includes a polyoxyalkylene-series resin, a polyphenylene ether-series resin, and a polysulfide-series resin (polythioether-series resin). As examples of the polyoxyalkylene-series resin, there may be mentioned a polyoxy$C_{2-4}$alkylene glycol such as a polyoxymethylene glycol, a polyoxyethylene glycol, a polyoxypropylene glycol, a polyoxyethylene-polyoxypropylene block-copolymer, a polyoxytetramethylene glycol, and the like. Preferred examples of the polyether-series resin include a polyacetal-series resin, a polyphenylene ether-series resin, and a polysulfide-series resin.

(3a) Polyacetal-series resin

The polyacetal-series resin may be a homopolymer (a homopolymer of formaldehyde), or a copolymer (e.g., a copolymer of trioxane with ethylene oxide and/or 1,3-dioxolane). Moreover, the end or terminal of the polyacetal-series resin may be blocked or capped to stabilize the resin. In the polyacetal-series resin, an active hydrogen atom comprises, for example, a hydrogen atom of an oxymethylene unit, a hydrogen atom of an alkoxy group (in particular methoxy group) of a blocked terminal, and in particular the hydrogen atom of the oxymethylene unit.

(3b) Polyphenylene ether-series resin

The polyphenylene ether-series resin includes various resins comprising 2,6-dimethylphenylene oxide as a main component, for example, a copolymer of 2,6-dimethylphenylene oxide and a phenol compound, and a modified resin obtained by blending or grafting a styrenic resin in the polyphenylene-series resin. In the polyphenylene ether-series resin, for example, the active hydrogen atom comprises a hydrogen atom of a methyl group bonding to a benzene ring.

Incidentally, the thermoplastic resin composition comprising the polyphenylene ether-series resin shows specifically high compatibility with the rubber composition, in the case where the rubber composition comprises a styrene-diene-series rubber (e.g., styrene-butadiene-series rubber) composition, and bonding between both the compositions becomes possible regardless of the species of a vulcanizing agent. Therefore, the rubber composition may be one comprising a sulfur-containing vulcanizing agent and a styrene-diene-series rubber (e.g., a styrene-butadiene-series rubber).

(3c) Polysulfide-series resin (polythioether-series resin)

The polysulfide-series resin is not particularly restricted to a specific resin so far as the resin has a thio group (-S-) in the polymer chain. Such a resin includes, for example, a polyphenylene sulfide resin, a polydisulfide resin, a polybiphenylene sulfide resin, a polyketone sulfide resin, a polythioether sulfone resin, and the like. Moreover, the polysulfide-series resin may have a substituent such as an amino group, like a poly(aminophenylene sulfide). The preferred polysulfide-series resin includes a polyphenylene sulfide resin. In the polysulfide-series resin, the active sulfur atom comprises a sulfur atom of a thio group in the main chain. For example, regarding the polyphenylene sulfide resin, the average number "N" of the active sulfur atom per molecule can be calculated based on a model of a basic unit "$Cl-C_6H_4-S-C_6H_4-S-C_6H_4-Cl$", and the unit has N=2.

(4) Polyolefinic resin

The polyolefinic resin includes, for example, a homopolymer or copolymer of an olefin such as a polyethylene, a polypropylene, an ethylene-propylene copolymer or a poly(methylpentene-1); and a copolymer of an olefin and a copolymerizable monomer (e.g., an ethylene-vinyl acetate copolymer, an ethylene-(meth)acrylic acid copolymer, an ethylene-(meth)acrylate copolymer). These polyolefinic resins may be used singly or in combination.
The preferred polyolefinic resin includes a polypropylene-series resin having a propylene content of not less than 50% by weight (in particular, 75 to 100% by weight), for example, a polypropylene, a propylene-ethylene copolymer, a propylene-butene copolymer, a propylene-ethylene-butene copolymer, and so on. Moreover, the polyolefinic resin preferably has crystallinity.
In the polyolefinic resin, for example, an active hydrogen atom comprises a hydrogen atom of a methylene group constituting a main chain of the polyolefin, a hydrogen atom of a methyl group branched from the main chain.

(5) Polyurethane-series resin

The polyurethane-series resin can be obtained by reacting a diisocyanate, a polyol (in particular, a diol) and, if necessary, a chain-extension agent. As the diisocyanate, there are exemplified an aliphatic diisocyanate such as hexamethylene diisocyanate or 2,2,4-trimethylhexamethylene diisocyanate; an alicyclic diisocyanate such as 1,4-cyclohexane diisocyanate or isophorone diisocyanate; an aromatic diisocyanate such as phenylene diisocyanate, tolylene diisocyanate, or diphenylmethane-4,4'-diisocyanate; an araliphatic diisocyanate such as xylylene diisocyanate; and so on. As the diisocyanate, there may be utilized a compound in which an alkyl group (e.g., methyl group) is substituted on a main chain or a ring thereof.
As the diol, there may be utilized a polyester diol (e.g., a polyesterdiol derived from a $C_{4-12}$ aliphatic dicarboxylic acid component such as adipic acid; a $C_{2-12}$ aliphatic diol component such as ethylene glycol, propylene glycol, butanediol, or neopentyl glycol; a $C_{4-12}$ lactone component such as ε-caprolactone), a polyether diol (e.g., a polyethylene glycol, a polypropylene glycol, a polyoxyethylene-polyoxypropylene block-copolymer, a polyoxytetramethylene glycol, a bisphenol A-alkylene oxide adduct), a polyester ether diol (a polyester diol in which the polyether diol is used as a part of the diol component).
Furthermore, as the chain-extension agent, a $C_{2-10}$ alkylene glycol such as ethylene glycol or propylene glycol as well as a diamine may be used. The diamine includes, for example, an aliphatic diamine such as a linear- or branched-alkylenediamine having about 2 to 10 carbon atoms (e.g., ethylenediamine, trimethylenediamine, tetramethylenediamine, pentamethylenediamine, hexamethylenediamine, trimethylhexamethylenediamine, 1,7-diaminoheptane, 1,8-diaminooctane) and a linear- or branched-polyalkylenepolyamine (e.g., diethylenetriamine, triethylenetetramine, tetraethylenepentamine, dipropylenetriamine); an alicyclic diamine such as isophoronediamine, bis(4-amino-3-methylcyclohexyl) methane, or bis(aminomethyl)cyclohexane; and an aromatic diamine such as phenylenediamine, xylylenediamine, or diaminodiphenylmethane.
In the polyurethane-series resin, an active hydrogen atom comprises, for example, a hydrogen atom of an alkyl group bonding to a main chain or a ring of a diisocyanate (in particular a hydrogen atom at a benzyl position), a hydrogen atom in an alkylene group of a polyol or a polyoxyalkylene glycol, a hydrogen atom in an amino group of the chain-extension agent.

(6) Thermoplastic elastomer

The thermoplastic elastomer includes a polyamide-series elastomer (a copolymer comprising a polyamide as a hard segment and an aliphatic polyether as a soft segment), a polyester-series elastomer (a copolymer comprising a polyalkylene arylate as a hard segment and an aliphatic polyether or aliphatic polyester as a soft segment), a polyurethane-series elastomer (a copolymer comprising a polyurethane containing a short-chain glycol as a hard segment and an aliphatic polyether or aliphatic polyester as a soft segment, for example, a polyester-urethane elastomer, a polyether-urethane elastomer, or the like), a polystyrenic elastomer (a block copolymer comprising a polystyrenic block as a hard segment and a diene-polymer block or a hydrogenated block thereof as a soft segment), a polyolefinic elastomer (e.g., an elastomer comprising a polystyrene or polypropylene as a hard segment and an ethylene-propylene rubber or an ethylene-propylene-diene rubber as a soft segment; an olefinic elastomer comprising a hard segment and a soft segment which are different in crystallinity), a polyvinyl chloride-series elastomer, a fluorine-containing thermoplastic elastomer, and so on. As the aliphatic polyether, there may be used a (poly)oxyC$_{2-4}$alkylene glycol exemplified in the paragraph of the polyester-series resin and the polyurethane-series resin [in particular, a (poly)oxyethylene glycol], and the like. As the aliphatic polyester, for example, the polyesterdiol mentioned in the paragraph of the polyurethane-series resin may be used. These thermoplastic elastomers may be used singly or in combination. When the thermoplastic elastomer is a block copolymer, the block structure is not particularly restricted, and may be a triblock structure, a multiblock structure, a star-shaped block structure or other structure.

The preferred examples of the thermoplastic elastomer include a polyamide-series elastomer, a polyester-series elastomer, a polyurethane-series elastomer, a polystyrenic elastomer, and a polyolefinic elastomer.

In the thermoplastic elastomer, an active hydrogen atom may comprise, for example, a hydrogen atom of an oxyalkylene unit constituting a soft segment.

(7) Other thermoplastic resin (modified resin)

The present invention applies to bonding or joining of a variety of thermoplastic resins having a predetermined concentration of the active atom to various rubbers. Therefore, when the thermoplastic resin does not have a given concentration of the active atom, the thermoplastic resin may be used as a modified resin obtained by introducing the active atom (or an amino group, an oxyalkylene group, a mercapto group, and so on) thereto. Such a thermoplastic resin (a resin having less concentration of an active atom than the determined concentration) includes, for example, a vinyl polymerization-series resin [e.g., a (meth)acrylic resin (e.g., a poly(methyl methacrylate), a methyl methacrylate-styrene copolymer (MS resin)); a styrenic resin (e.g., a polystyrene; a styrenic copolymer such as an AS resin or a styrene-methyl methacrylate copolymer; a styrenic grafted copolymer such as a HIPS or an ABS resin), a homopolymer or copolymer comprising a halogen-containing monomer (e.g., a polyvinyl chloride, a vinylidene chloride copolymer), a vinyl-series resin (e.g., a polyvinyl acetate, a polyvinyl alcohol)], and a condensation-series resin [e.g., a polycarbonate (e.g., a bisphenol A-based polycarbonate resin), a polyimide-series resin, a polysulfone-series resin, a polyether sulfone-series resin, a polyether ether ketone-series resin, a polyarylate-series resin].

In the vinyl polymerization-series resin, a modified resin may be obtained by copolymerization of a vinyl monomer and a monomer containing a carboxyl group or acid anhydride group such as (meth)acrylic acid or maleic anhydride to introduce a carboxyl group or acid anhydride group into the vinyl polymerization-series resin, and, if necessary, reacting the resulting resin with thionyl chloride to produce an acid chloride group, and reacting the resultant with ammonia, a mono-substituted amine (e.g., a monoalkylamine, a monoarylamine) or the diamine mentioned above to introduce an amino group into the resin. Further, a copolymerization of a (poly)oxyalkylene glycol mono(meth)acrylate or a (poly)oxyalkylene glycol monoalkylether (meth)acrylate with the vinyl monomer, or a graft-polymerization of the mono(meth)acrylates to the vinyl polymerization-series resin may introduce the active hydrogen atom into the vinyl polymerization-series resin for modification.

Further, for the condensation-series resin as well as the vinyl polymerization-series resin, a modification may be carried out by graft-polymerizing a carboxyl group-or acid anhydride group-containing monomer with a resin to introduce the carboxyl group or acid anhydride group into the resin, if necessary, by reacting the resulting resin with thionyl chloride to produce an acid chloride group, and by reacting the acid chloride group with ammonia, a mono-substituted amine, or the diamine mentioned above to introduce an amino group as same manner as in the above vinyl polymerization-series resin.

(Other component)

The resin member may essentially comprise a thermoplastic resin having a given concentration of the active atom, and may be a resin composition comprising the above-mentioned thermoplastic resin and other thermoplastic resin. As the other thermoplastic resin, there may be mentioned an unmodified thermoplastic resin corresponding to the modified resin (7), for example, a styrenic resin, a (meth)acrylic resin, a homopolymer or copolymer of a halogen-containing monomer (e.g., a fluorine-containing resin), a vinyl-series resin, a polycarbonate-series resin, a polyimide-series resin, a polysulfone-series resin, a polyether sulfone-series resin, a polyether ether ketone-series resin, a polyarylate-series resin, a liquid-crystal polyester resin, and the like.

The amount of the thermoplastic resin having the active atom is about 30 to 100% by weight, preferably about 50 to 100% by weight, and more preferably about 80 to 100% by weight based on the total amount of the resin components.

(Crosslinkable group-containing resin)

The crosslinkable group-containing resin can be roughly classified into a thermoplastic resin having an unsaturated bond (a polymerizable or crosslinkable unsaturated bond) and a thermosetting resin having a crosslinkable functional group. The crosslinkable resin may have both the unsaturated bond and the crosslinkable functional group.

(Thermoplastic resin having unsaturated bond)

The present invention may be also utilized in bonding between rubbers and various thermoplastic resins containing an unsaturated bond active to a radical at a given concentration. Therefore, in the case where the thermoplastic resin is an unsaturated bond-free resin or a resin in which the unsaturated bond is short of a given concentration, the thermoplastic resin may be used as a modified resin or reformed resin into which unsaturated bond(s) is(are) introduced. The unsaturated bond is not particularly restricted to a specific bond as far as the unsaturated bond can be activated by a vulcanizing agent such as a radical-generating agent, there may be various bonds (in particular polymerizable unsaturated bonds) showing crosslinkable or polymerizable ability by imparting of heat or light. Such an unsaturated bond or a unit having an unsaturated bond may bond to a thermoplastic resin through a connection group [e.g., an ether bond (-O-), an ester bond (-OC(=O)-, -C(=O)O-), an amide bond (-NHCO-, -CONH-), an imino bond (-NH-), a urethane bond (-NHC(=O)O-), a urea bond, a biuret bond]. Further, the unsaturated bond or the unit may be located either in a terminal of the resin (terminal of a main chain) and/or in a side chain of the resin, or in a main chain of the resin. Furthermore, the unsaturated bond or the unit may be located in a terminal and/or side chain of the resin, in a main chain of the resin, or both.

As the group having an unsaturated bond, there may be exemplified, for example, a $C_{2-6}$alkenyl group such as vinyl group, 1-propenyl group, isopropenyl group, 1-butenyl group, allyl group, 2-methyl-2-propenyl group, or 2-butenyl group; a $C_{2-6}$alkenyl-$C_{6-20}$aryl group such as 4-vinylphenyl group, or 4-isopropenylphenyl group; a $C_{6-20}$aryl-$C_{2-6}$alkenyl group such as styryl group; a $C_{2-6}$ alkynyl group such as ethynyl group, 1-propynyl group, 1-butynyl group, propargyl group, 2-butynyl group, or 1-methyl-2-propynyl group; a mono- or di-$C_{1-6}$alkylvinylene group such as vinylene group, methylvinylene group, ethylvinylene group, or 1,2-dimethylvinylene group; a vinylene group which may have a substituent such as a halovinylene group (e.g., a chlorovinylene group); a vinylidene group; an ethynylene group; and the like.

As the thermoplastic resin having an unsaturated bond, for example, there may be mentioned the following resins:

(1) a resin produced by a reaction of a compound having a reactive group (A) and an unsaturated bond with a resin (such as a thermoplastic resin) having a reactive group (B) which is reactive to the reactive group (A),
(2) a thermoplastic resin into which an unsaturated bond is introduced by copolymerization or copolycondensation,
(3) a polymer blend formed with (or out of) a resin having an unsaturated bond and another resin, and
(4) a thermoplastic resin into which an unsaturated bond is introduced by various organic reactions (e.g., introduction of a vinyl group by Reppe reaction using acetylene, introduction of an unsaturated bond using an organic metal reagent such as vinyl lithium, introduction of an unsaturated bond by coupling reaction). The preferred resin is the foregoing resin (1), (2), or (3).

In the resin (1), an unsaturated bond may be introduced into a resin by a reaction of a polymerizable compound having at least one reactive group (A) and at least one unsaturated bond, with a resin having a reactive group (B) which is reactive to the reactive group (A) in the polymerizable compound.

As such a representative reactive group (A) in a polymerizable compound, there may be mentioned, for example, (A1) hydroxyl group, (A2) carboxyl group or acid anhydride group thereof, (A3) amino group, (A4) epoxy group, (A5) isocyanate group, and the like. As the combination of a reactive group (A) in a polymerizable compound with a reactive group (B) in a resin, the following combinations can be exemplified. Incidentally, words in the parentheses show a bond form (type or mode) between the reactive group (A) and the reactive group (B).

(A1) hydroxyl group:
(B) carboxyl group or acid anhydride group thereof (ester bond), isocyanate group (ester bond)
(A2) carboxyl group or acid anhydride group thereof:
(B) hydroxyl group (ester bond), amino group (amide bond), epoxy group (ester bond), isocyanate group (amide bond)
(A3) amino group:

(B) carboxyl group or acid anhydride group thereof (amide bond), epoxy group (imino bond), isocyanate group (amide bond)

(A4) epoxy group:

(B) carboxyl group or acid anhydride group thereof (ester bond), amino group (imino bond)

(A5) isocyanate group:

(B) hydroxyl group (ester bond), carboxyl group or acid anhydride group thereof (amide bond), amino group (amide bond)

Regarding the reactive group (B) of the resin, in the polyamide-series resin, for example, a residual carboxyl group or a residual amino group may be utilized as the reactive group (B). In the polyester-series resin, for example, a residual carboxyl group or a residual hydroxyl group may be utilized as the reactive group (B). In the poly(thio)ether-series resin, a residual hydroxyl group or a residual mercapto group may be utilized as the reactive group (B). In the polyacetal-series resin, a residual hydroxyl group may be utilized as the reactive group (B). Further, in the polycarbonate-series resin, a residual hydroxyl group may be utilized as the reactive group (B). In the polyimide-series resin, a residual carboxyl group or acid anhydride group, a residual amino group, or a residual imino group may be utilized as the reactive group (B). Furthermore, in the polyurethane-series resin, for example, a residual hydroxyl group, a residual amino group, or a residual isocyanate group may be utilized as the reactive group (B). The reactive group (B) may be introduced into the (meth)acrylic resin with the use of a monomer having the reactive group (B) as a copolymerizable component.

The polymerizable compound can be exemplified by a hydroxyl group-containing compound [e.g., a $C_{3-6}$alkenol such as allylalcohol, 2-buten-1-ol or 3-buten-2-ol; a $C_{3-6}$alkynol such as propargyl alcohol; a $C_{2-6}$alkylene glycol mono(meth)acrylate such as 2-hydroxyethyl (meth)acrylate, 2-hydroxypropyl (meth)acrylate, or butanediol mono (meth)acrylate; a polyoxy$C_{2-6}$alkylene glycol mono(meth)acrylate such as diethylene glycol mono(meth)acrylate; a $C_{2-6}$alkenylphenol such as 4-hydroxystyrene or 4-hydroxy-$\alpha$-methylstyrene; dihydroxystyrene; vinylnaphthol], a compound containing a carboxyl group or an acid anhydride group thereof [e.g., a $C_{3-6}$alkene-carboxylic acid such as (meth)acrylic acid, crotonic acid or 3-butene acid; a $C_{4-8}$alkene-dicarboxylic acid or an anhydride thereof such as itaconic acid, maleic acid or maleic anhydride; an unsaturated aromatic carboxylic acid such as vinyl benzoic acid; cinnamic acid], a compound containing an amino group (e.g., a $C_{3-6}$ alkenylamine such as allylamine, 4-aminostyrene, diaminostyrene), a compound containing an epoxy group (e.g., allyl glycidyl ether, glycidyl(meth)acrylate), a compound containing an isocyanate group (e.g., vinylisocyanate) and the like.

Incidentally, in the resin (1), in the case of using a resin having no reactive group (B) or having the reactive group (B) at a low concentration, the resin may be reformed or modified by being introduced a reactive group (B). As the method for introducing the reactive group (B) into the resin, there may be utilized: (i) a method copolymerizing a monomer having a reactive group (B) (such as the above-exemplified polymerizable compound) with a resin material (or a monomer or oligomer constituting the resin raw materials) in a resin production, and (ii) various organic reactions such as an oxidative reaction for introduction of a carboxyl group, a halogenation method, a graft method of a polymerizable monomer. Incidentally, in the vinyl polymerizable resins, the reactive group (B) is usually introduced (into the resin) with the use of a monomer having the reactive group (B) as a copolymerizable component in many cases, and in any resins including the vinyl polymerizable resins, the reactive group (B) can be easily introduced by graft reaction of the polymerizable compound having the reactive group.

In the resin (2), as a method for introducing an unsaturated bond, there may be mentioned, for example, a method which comprises copolycondensing (or copolymerizing) a polyfunctional compound having an unsaturated bond as a part of a reactive component (comonomer) [e.g., an unsaturated polycarboxylic acid (an unsaturated polybasic carboxylic acid) such as an aliphatic unsaturated dicarboxylic acid (an aliphatic unsaturated dibasic carboxylic acid) (e.g., a $C_{4-10}$ aliphatic unsaturated dicarboxylic acid such as maleic acid, maleic anhydride, fumaric acid, itaconic acid, itaconic anhydride, citraconic acid, citraconic anhydride, or methaconic acid); an unsaturated polyhydric alcohol such as an aliphatic unsaturated diol (e.g., a $C_{4-10}$ aliphatic unsaturated diol such as 2-buten-1,4-diol)] in a production of a condensation-series resin (such as a polyamide-series resin, a polyester-series resin). Moreover, in an addition polymerization-series resin (such as an olefinic resin), there may be exemplified a method which comprises copolymerizing a monomer having a conjugated unsaturated bond (e.g., a conjugated $C_{4-10}$ alkadiene which may have a substituent, such as 1,3-butadiene, 2-methyl-1,3-butadiene, 2,3-dimethyl-1,3-butadiene, or chloroprene) as a part of a reactive component (comonomer).

In the resin (3), an unsaturated bond can be introduced into a thermoplastic resin by mixing the thermoplastic resin (A) with the resin (B) having the unsaturated bond to give a polymer blend (or a resin composition).

The thermoplastic resin (A) is not particularly restricted to a specific resin, and a variety of thermoplastic resins [for example, the above-mentioned thermoplastic resin (e.g., a polyamide-series resin, a polyester-series resin)] may be exemplified. Moreover, the thermoplastic resin (A) may be a saturated resin having no unsaturated bond or a resin having an unsaturated bond(s).

As the resin (B) having an unsaturated bond, there may be exemplified a thermoplastic resin into which the unsaturated bond is introduced, such as the above-mentioned resin (1), (2) or (4), a rubber containing an unsaturated bond (e.g., a polyC$_{4-15}$alkenylene such as a polybutadiene, a polyisoprene, a polypentenamer, a polyheptenamer, a polyoctenamer, a poly(3-methyloctenamer), a polydecenamer, a poly(3-methyldecenamer), or a polydodecenamer; a C$_{4-15}$alkadiene copolymer such as a butadiene-isoprene copolymer; a rubber-modified (rubber-containing, rubber-reinforced or rubber-incorporated) polyolefin such as a butadiene-modified polyethylene); and the like. Incidentally, the polyC$_{4-15}$alkenylene may be obtained by metathesis polymerization of a cycloolefin (e.g., a C$_{5-20}$cycloolefin which may have a substituent, such as cyclopentene, cycloheptene, cyclooctene, cyclodecene, orcyclododecene) or partial hydrogenation of a polyalkenylene (e.g., a polybutadiene).

In the resin (4), the proportion of the resin (B) may fall within a range, for example, a range where an unsaturated bond in a predetermined concentration can be introduced into a polymer blend, for example, the range of about 5/95 to 95/5, preferably about 30/70 to 95/5, and more preferably about 50/50 to 95/5 as a weight ratio of the resin (A) /the resin (B). Moreover, in the case of using a rubber containing an unsaturated bond (e.g., a polyoctenylene) as the resin (B), the proportion of resin (B) may be selected from the range not damaging the properties of the resin (A), for example, the range of about 50/50 to 95/5, preferably about 60/40 to 95/5, and more preferably about 70/30 to 95/5 as a weight ratio of the resin (A)/the resin (B).

Incidentally, in the resin composition of the resin (4), the resin (A) and the resin (B) may form a polymer alloy (such as a polymer alloy having an island-in-an ocean structure). As the thermoplastic resin, there may be exemplified the above-mentioned thermoplastic resins (1) to (7). These resins may be used singly or in combination. When two or more species of the resins are used, the resin composition may be a composite resin composition such as a polymer alloy.

The proportion of the unsaturated bond depends on the species of resin or the degree of activation of the unsaturated bond, and the number of the unsaturated bond is, for example, not less than 0.1 (e.g., about 0.1 to 1000) on the average per molecule of resin, preferably not less than 1 (e.g., about 1 to 100) on the average, and more preferably not less than 2 (e.g., about 2 to 50) on the average. Moreover, the concentration of the unsaturated bond is, for example, about 0.001 to 6.6 mole relative to 1 kg of resin, preferably about 0.01 to 4 mole (e.g., about 0.01 to 1 mole), and more preferably about 0.02 to 2 mole (e.g., about 0.05 to 0.5 mole).

Incidentally, upon introducing an unsaturated bond with a polymer blend, the number of the unsaturated bond may be calculated as the average value according to weight ratio of each resin. It is convenient to calculate the number of the unsaturated bond in the resin composition as the concentration (mole/kg).

(Thermosetting resin having crosslinkable functional group)

As the thermosetting resin, there may be exemplified a resin having a functional group (e.g., methylol group, an alkoxymethyl group, epoxy group, isocyanate group) crosslinkable or curable ability in the presence of a crosslinking agent (or a curing agent), or other agent. Such a thermosetting resin includes a polycondensation- or addition condensation-series resin (e. g. , a phenol resin, an amino-series resin, an epoxy resin, a thermosetting polyimide-series resin, a thermosetting polyurethane-series resin, a silicone resin), an addition polymerization-series resin (e.g., an unsaturated polyester-series resin, a vinylester-series resin, a diallylphthalate-series resin, a thermosetting (meth)acrylic resin) and the like. The thermosetting resin(s) may be used singly or in combination.

(8) Phenol resin

The phenol resin includes a novolak resin, a resol resin and so on, and the novolak resin is usually employed. The novolak resin may be obtained by a reaction of a phenol compound with an aldehyde in the presence of an acid catalyst. As such a phenol compound, there may be mentioned, for example, phenol, a C$_{1-4}$alkylphenol (e.g., o-, m- or p-cresol, 2,5-, 3,5- or 3,4-xylenol, 2,3,5-trimethylphenol, ethylphenol, propylphenol), a dihydroxybenzene, a resorcinol, a naphthol, and the like. These phenol compounds may be used singly or in combination. As the aldehyde, there may be mentioned, for example, an aliphatic aldehyde such as formaldehyde (formic aldehyde), paraformaldehyde, acetaldehyde or propionaldehyde, an aromatic aldehyde such as benzaldehyde or salicylaldehyde, and the like. These aldehydes may be used singly or in combination.

(9) Amino-series resin

The amino-series resin is usually obtained by a reaction of an amino group-containing compound with an aldehyde (e.g., an aliphatic aldehyde such as formaldehyde (formic aldehyde), acetaldehyde or propionaldehyde, an aromatic aldehyde such as phenylacetaldehyde). The amino-series resin includes a urea resin (e.g., a urea resin obtained by a reaction of a urea with an aldehyde), an aniline resin (e. g. , an aniline resin obtained by a reaction of

**14**

an aniline such as aniline, naphthylamine, toluidine, xylidine, N,N'-dimethylaniline or benzidine, with an aldehyde), a melamine resin (e.g., a melamine resin obtained by a reaction of a melamine with an aldehyde), a guanamine resin (e.g., a guanamine resin obtained by a reaction of a guanamine such as benzoguanamine, acetoguanamine or formoguanamine, with an aldehyde) and the like.

(10) Epoxy resin

Such an epoxy resin includes a bisphenol-based epoxy resin, a novolak epoxy resin, an amine-series epoxy resin, and so on.

As the bisphenol-based epoxy resin, there may be exemplified a glycidyl ether of 4,4-biphenol, 2,2-biphenol, bisphenol F, bisphenol AD or bisphenol A.

As a novolak resin constituting the novolak epoxy resin, for example, there may be mentioned a novolak resin obtained by a reaction of a phenol compound with an aldehyde, as described in the above section of the novolak resin.

As an amine component constituting an amine-series epoxy resin, there may be mentioned, for example, an aromatic amine such as aniline or toluidine, an aromatic diamine such as a diaminobenzene or a xylylenediamine, an aminohydroxybenzene, a diaminodiphenylmethane, and the like.

(11) Thermosetting polyimide-series resin

The thermosetting polyimide-series resin includes the resin described in the paragraph of the above-mentioned polyimide-series resin (e.g., a thermosetting resin composition having a plurality of ring-openable imide groups).

(12) Thermosetting polyurethane-series resin

The thermosetting polyurethane-series resin includes the resin described in the paragraph of the above-mentioned polyurethane-series resin (e.g., a thermosetting resin composition comprising a prepolymer having a plurality of free isocyanate groups, and a polyol component such as a polyester polyol).

(13) Silicone resin

The silicone resin includes a silicone resin comprising a unit represented by a formula $R_aSiO_{(4-a)/2}$ (the coefficient "a" is about 1.9 to 2.1 in the formula) and a unit represented by a formula $R_bSiO_{(4-b)/2}$ (the coefficient "b" is about 0.9 to 1.1 in the formula), and the like. In the formulae, R represents, for example, a $C_{1-10}$alkyl group such as methyl, ethyl, propyl or butyl group; a halogenated $C_{1-10}$alkyl group such as 3-chloropropyl group or 3,3,3-trifluoropropyl group; a $C_{2-10}$alkenyl group such as vinyl, allyl or butenyl group; a $C_{6-12}$aryl group such as phenyl, tolyl or naphthyl group; a $C_{3-10}$cycloalkyl group such as cyclopentyl or cyclohexyl group; a $C_{6-12}$aryl-$C_{1-4}$alkyl group such as benzyl or phenethyl group; etc.

(14) Unsaturated polyester-series resin

The unsaturated polyester resin includes an unsaturated polyester obtained by using an unsaturated dicarboxylic acid or an anhydride thereof (e.g., maleic acid, maleic anhydride, fumaric acid) as a dicarboxylic acid component in the above-mentioned polyester-series resin, and the like.

(15) Vinylester resin

The vinylester resin includes a polymer obtained by a reaction of the above-mentioned epoxy resin with a (meth)acrylic acid, a polymer obtained by a reaction of a polyhydric phenol with a glycidyl (meth)acrylate, and the like.

(16) Diallylphthalate resin

The diallylphthalate resin includes a resin obtained from a diallylphthalate monomer such as diallylorthophthalate or diallylisophthalate, and the like.

(17) Thermosetting (meth)acrylic resin

The thermosetting (meth)acrylic resin includes a resin described in the paragraph of the above-mentioned (meth)acrylic resin [e.g., a resin composition comprising a hardening (curing) agent and a (meth)acrylic resin having a reactive group such as a hydroxyl group].

Incidentally, a resin having a crosslinkable group (in particular a crosslinkable resin other than a thermoplastic resin) may also have a plurality of active atoms (at least one active atom selected from an active hydrogen atom and an active sulfur atom) showing high activity to a radical in the same manner as the above-mentioned thermoplastic resin. The orbital interaction energy coefficient S or the concentration of the active atom has a value similar to that of the thermoplastic resin.

[Rubber member]

(Rubber)

The rubber member is obtained by molding (or vulcanizing) a rubber composition comprising a vulcanizing agent and a rubber. The rubber is not particularly restricted insofar as the rubber can be compatible or react with the resin mentioned in the item of Resin member, and various rubbers may be used. The rubber may be selected within a wide range.

The rubber includes a diene-series rubber, an olefinic rubber, an acrylic rubber, a fluorine-containing rubber, a urethane-series rubber, an epichlorohydrin rubber (e.g., a homopolymer of epichlorohydrin (CO), a copolymer of epichlorohydrin and ethylene oxide (ECO), a copolymer further copolymerized with allyl glycidyl ether), a chlorosulfonated polyethylene, a propylene oxide rubber (GPO), an ethylene-vinyl acetate copolymer (EAM), a polynorbornene rubber, and a modified rubber thereof (e.g., an acid-introduced (or acid-modified) rubber), and other rubbers. These rubbers may be used singly or in combination. Among these rubbers, in view of a practical use, a widely employed rubber usually includes the diene-series rubber, the olefinic rubber, the acrylic rubber, the fluorine-containing rubber, the urethane-series rubber, and so on.

As the diene-series rubber, for example, there may be mentioned a natural rubber (NR); a polymer of a diene-series monomer, such as an isoprene rubber (IR), an isobutylene-isoprene rubber (butyl rubber) (IIR), a butadiene rubber (BR), or a chloroprene rubber (CR); an acrylonitrile-diene copolymerized rubber such as an acrylonitrile-butadiene rubber (nitrile rubber) (NBR), a nitrile-chloroprene rubber (NCR), or a nitrile-isoprene rubber (NIR); a styrene-diene copolymerized rubber such as a styrene-butadiene rubber (SBR, for example, a random copolymer of styrene and butadiene, an SB-block copolymer comprising a styrene block and a butadiene block), a styrene-chloroprene rubber (SCR), or a styrene-isoprene rubber (SIR); and other diene-containing rubber. The diene-series rubber also includes a hydrogenated rubber, for example, a hydrogenated nitrile rubber (H-NBR) or the like.

The olefinic rubber includes, for example, an ethylene-propylene rubber (EPM), an ethylene-propylene-diene rubber (EPDM), a polyoctenylene rubber, and other rubbers.

The acrylic rubber includes a rubber comprising an alkyl acrylate as a main component, such as a copolymer of an alkyl acrylate and a chlorine-containing crosslinkable monomer (ACM), a copolymer of an alkyl acrylate and acrylonitrile (ANM), a copolymer of an alkyl acrylate and a carboxyl group- and/or epoxy group-containing monomer, and an ethylene-acrylic rubber.

As the fluorine-containing rubber, there are exemplified a rubber obtained by using a fluorine-containing monomer, for example, a copolymer of vinylidene fluoride and perfluoropropene, and if necessary, tetrafluoroethylene (FKM); a copolymer of tetrafluoroethylene and propylene; a copolymer of tetrafluoroethylene and perfluoromethyl vinyl ether (FFKM).

The urethane rubber (U) includes, for example, a polyester-based urethane elastomer, a polyether-based urethane elastomer, and other elastomers.

As the modified rubber, there may be mentioned, for example, an acid-introduced (or acid-modified) rubber such as a carboxyl group- or acid anhydride group-containing rubber [e.g., a carboxylic styrene-butadiene rubber (X-SBR), a carboxylic nitrile rubber (X-NBR), and a carboxylic ethylene-propylene rubber (X-EP(D)M)].

[Vulcanizing agent]

In the present invention, as the vulcanizing agent, there may be used either a sulfur-containing vulcanizing agent (such as a sulfur or a sulfur-containing compound), or a sulfur-free vulcanizing agent (e.g., a radical-generating vulcanizing agent such as an organic peroxide).

(Sulfur-free vulcanizing agent (radical-generating agent))

The radical-generating agent not only vulcanizes (or crosslinks) the above rubber but also acts to the above resin (for example, activates the thermoplastic resin radically by a hydrogen-drawing reaction in which the active hydrogen atom is drawn from the thermoplastic resin), to directly bond the resin and a vulcanized rubber by a crosslinking reaction. As the radical-generating agent, various radical-generating agents may be used depending on species of the resin or the rubber, and the radical-generating agent may be selected from, for example, an organic peroxide, an azo compound, a sulfur-containing organic compound other than a sulfur. The radical-generating agent(s) may be used singly or in combination.

The organic peroxide includes a diacyl peroxide (e.g., lauroyl peroxide, benzoyl peroxide, 4-chlorobenzoyl peroxide, 2,4-dichlorobenzoyl peroxide), a dialkyl peroxide [e.g., di-t-butyl peroxide, 2,5-di(t-butylperoxy)-2,5-dimethylhexane, 1,1-bis(t-butylperoxy) -3,3,5-trimethylcyclohexane, 2,5-di(t-butylperoxy)-2,5-dimethylhexene-3, 1,3-bis(t-butylperoxyisopropyl) benzene, dicumyl peroxide], an alkyl peroxide (e.g., t-butyl hydroperoxide, cumene hydroperoxide, 2,5-dimethylhexane-2,5-dihydroperoxide, diisopropylbenzene hydroperoxide), an alkylidene peroxide [e.g., ethylmethylketone peroxide, cyclohexanone peroxide, 1,1-bis(t-butylperoxy)-3,3,5-trimethylcyclohexane], a peracid ester (e.g., t-butyl peracetate, t-butyl perpivalate), or others.

The azo compound may include azobisisobutylonitrile and other compounds. The sulfur-containing organic compound may include a thiuram [e.g., tetramethylthiuram monosulfide (TMTM), tetramethylthiuram disulfide (TMTD), tetraethylthiuram disulfide (TETD), tetrabutylthiuram disulfide (TBTD), dipentamethylenethiuram tetrasulfide (DPTT)]; a dithiocarbamate [e.g., a salt of a $diC_{1-4}$ alkyldithiocarbamic acid (e.g., dimethyldithiocarbamic acid or diethyldithiocarbamic acid) with a metal (e.g., an alkali metal such as sodium or potassium, a transition metal such as iron, copper or zinc, a metal of the Group 6B of the Periodic Table of Elements such as selenium or tellurium)]; and a thiazole (e. g., 2-mercaptobenzothiazole, 2-(4'-morpholinodithio)benzothiazole).

In the case where as a photoirradiation is applicable in the bonding of the resin member to the rubber member, a photopolymerization initiator may be also employed as the radical-generating agent. The photopolymerization initiator or photoinitiator may include, for example, a benzophenone or a derivative thereof (e.g., 3,3'-dimethyl-4-methoxybenzophenone, 4,4-dimethoxybenzophenone), an alkylphenylketone or a derivative thereof [e.g., acetophenone, diethoxyacetophenone, 2-hydroxy-2-methyl-1-phenylpropan-1-on, benzyldimethylketal, 1-hydroxycyclohexylphenylketone, 2-benzyl-2-dimethylamino-1-(morpholinophenyl)-butanone], an anthraquinone or a derivative thereof (e.g., 2-methyl anthraquinone), a thioxanthone or a derivative thereof (e.g., 2-chlorothioxanthone, an alkylthioxanthone), a benzoin ether or a derivative thereof (e.g., benzoin, a benzoin alkyl ether), a phosphine oxide or a derivative thereof, and others. The radical-generating agent also includes a persulfate (e.g., ammonium persulfate, potassium persulfate).

Among these compounds, the preferred radical-generating agent is the organic peroxide.

The proportion of the radical-generating agent may for example be selected within a range of about 0.5 to 15 parts by weight relative to 100 parts by weight of an unvulcanized rubber, and is usually about 1 to 10 parts by weight, and more preferably about 1 to 8 parts by weight (e.g., about 2 to 7 parts by weight).

(Sulfur-containing vulcanizing agent)

The rubber member may be obtained by molding (vulcanizing) a rubber composition containing a sulfur-containing vulcanizing agent and a rubber. As the sulfur-containing vulcanizing agent, there may be exemplified a sulfur, a sulfur chloride, the above-mentioned sulfur-containing organic compound, or others. The amount of the sulfur-containing vulcanizing agent is about 1 to 10 parts by weight, preferably about 2 to 7 parts by weight, and more preferably about 3 to 5 parts by weight relative to 100 parts by weight of the rubber component.

Incidentally, combining the crosslinkable resin or polyphenylene ether-series resin with the rubber member ensures high adhesiveness of the rubber member and the resin member, even if the sulfur-containing vulcanizing agent is used for vulcanization of the rubber component.

[Vulcanization-activating agent]

In the present invention, at least one component of a resin (or resin composition) and an unvulcanized rubber (or unvulcanized rubber composition) may contain a vulcanization-activating agent (hereinafter may be sometimes referred to as a hardening agent). Moreover, in the resin and/or the unvulcanized rubber, the vulcanization-activating agent may be used together with the vulcanizing agent in order to enhance an adhesion efficiency by the vulcanizing agent. The vulcanization-activating agent accelerates not only rubber vulcanization but also crosslinking between a rubber molecule and a resin molecule, thereby facilitating bonding of the rubber member to the resin member. For example, when the thermoplastic resin is a polyphenylene ether-series resin, the combination use of the radical-generating agent with the vulcanization-activating agent ensures progressing of crosslinking reaction between the resin member and the vulcanized rubber member, and realizes reliable and firm bonding between the both members. Incidentally, it is sufficient that the vulcanization-activating agent exists in an amount necessary to acceleration of vulcanization in the rubber and crosslinking formation between the rubber and the resin. The excessive amount of vulcanization-activating agent sometimes brings on deterioration in physical properties of the rubber, and therefore, the adequate amount to be added may be selected fitly.

The vulcanization-activating agent includes an organic compound having a carbon-carbon double bond (a polymerizable group or a polymerizable unsaturated bond) [e.g., a vinyl-series monomer (e.g., divinylbenzene), an allyl-series monomer (e.g., a diallyl phthalate, a triallyl phosphate, a triallyl (iso)cyanurate, a (meth)acrylic monomer], a maleimide-series compound, and others. These vulcanization-activating agents (or activators) may be used singly or in combination. As the vulcanization-activating agent, there is usually employed a polyfunctional compound having a plurality (not less than two) of polymerizable unsaturated bonds.

Examples of the (meth)acrylic monomer include a bifunctional (meth)acrylate [e.g., a $C_{2-10}$alkylene glycol di (meth)acrylate such as ethylene glycol di(meth)acrylate, propylene glycol di(meth)acrylate, 1,4-butanediol di(meth) acrylate, hexanediol di(meth)acrylate, or neopentyl glycol di(meth)acrylate; a poly$C_{2-4}$alkylene glycol di(meth)acrylate such as diethylene glycol di(meth)acrylate, triethylene glycol di(meth)acrylate, a polyethylene glycol di(meth)acrylate, dipropylene glycol di(meth)acrylate, tripropylene glycol di(meth)acrylate, a polypropylene glycol di(meth)acrylate, or a polytetramethylene glycol di(meth)acrylate; glycerol di(meth)acrylate; trimethylolpropane di(meth)acrylate; pentaerythritol di(meth)acrylate; and di(meth)acrylate of bisphenol A-$C_{2-4}$alkylene oxide-adduct], a tri- or poly-functional (multifunctional) (meth)acrylate [e.g., glycerol tri(meth)acrylate, trimethylolethane tri(meth)acrylate, trimethylolpropane tri (meth)acrylate, pentaerythritol tri(meth)acrylate, pentaerythritol tetra(meth)acrylate, dipentaerythritol tetra(meth)acrylate, dipentaerythritol hexa(meth)acrylate].

A maleimide-series compound having a plurality of maleimide groups can be obtained by a reaction of a polyamine with a maleic anhydride. Examples of the maleimide-series compound include an aromatic bismaleimide [e.g., N,N'-1,3-phenylenedimaleimide, N,N'-1,4-phenylenedimaleimide, N,N'-3-methyl-1,4-phenylenedimaleimide, 4,4'-bis(N,N'-maleimide)diphenylmethane, 4,4'-bis(N,N'-maleimide)diphenyl sulfone, 4,4'-bis(N,N'-maleimide)diphenyl ether], and an aliphatic bismaleimide (e.g., N,N'-1,2-ethylenebismaleimide, N,N'-1,3-propylenebismaleimide, N,N'-1,4-tetramethylenebismaleimide).

The preferred vulcanization-activating agent includes a compound having a plurality (e.g., about 2 to 6, in particular about 3 to 6) of carbon-carbon double bonds (polymerizable unsaturated bonds) per molecule, for example, a triallyl (iso)cyanurate, a bi- or polyfunctional (multifunctional) (meth)acrylate (in particular, tri- to poly-functional (multifunctional)(meth)acrylate), and an aromatic maleimide compound.

In the present invention, the addition of the vulcanization-activating agent is not essential. For example, depending on the number of an active atom contained in a molecule constituting a thermoplastic resin, or the species of a rubber material to be used, the presence of the vulcanization-activating agent is not required to bond both members. In practical cases, however, in order to ensure firm bonding of the rubber member and the resin member, the vulcanization-activating agent is advantageously added. The vulcanization-activating agent may be added to at least one component selected from the unvulcanized rubber (or the unvulcanized rubber composition) and the thermoplastic resin (or the resin composition), and may be added to both components. The vulcanization-activating agent is added to the unvulcanized rubber in many cases. The amount of the vulcanization-activating agent is varied depending on the species of the vulcanization-activating agent to be used and the species of the component to be added (the unvulcanized rubber and/or the thermoplastic resin), and is usually an effective amount for accelerating an adhesion or bonding between the thermoplastic resin and the rubber, for example, about 0.1 to 10 parts by weight, preferably about 0.1 to 5 parts by weight, and more preferably about 0.1 to 3 parts by weight, relative to 100 parts by weight of at least one component selected from the rubber and the resin. For example, in the case where the vulcanization-activating agent comprises a methacrylate of a polyhydric alcohol, the amount of the vulcanization-activating agent is about 0.1 to 10 parts by weight, preferably about 0.1 to 5 parts by weight, more preferably about 0.1 to 3 parts by weight, and practically about 0.1 to 1.9 parts by weight (e.g., 0.5 part by weight, 1.0 part by weight), relative to 100 parts by weight of at least one component selected from the rubber and the resin. Moreover, in the case where the vulcanization-activating agent is added to both of the resin and the rubber, a small amount of the vulcanization-activating agent may be added to the resin, and the vulcanization-activating agent may be used in a proportion of about 0.1 to 7 parts by weight, preferably about 0.1 to 5 parts by weight, and more preferably about 0.1 to 3 parts by weight, relative to 100 parts by weight of the resin.

An excess amount of the vulcanization-activating agent may significantly affect physical properties of the rubber member or the resin member, depending on species of the vulcanization-activating agent. For example, the addition of the excess amount of the vulcanization-activating agent to the rubber component causes troublesomeness, for example, a far higher hardness of a vulcanized rubber than a designed value, and significant deterioration in a long-term property of the rubber member such as a weather resistance. Moreover, the addition of the excess amount of the vulcanization-activating agent to the resin component causes a gel-formation accompanying with a resin member molding to make an appropriate molding difficulty, and a decrease of a mechanical strength. Further, the added vulcanization-activating agent is migrated from the resin member in some cases.

Therefore, in any cases of addition of the vulcanization-activating agent to the rubber component or the resin member, the exceeding amount of more than 10 parts by weight of the vulcanization-activating agent relative to 100 parts by weight of an added object (rubber or resin) is objectionable, and it should be carefully handled in the case of the amount of not less than 5 parts by weight, and thus, prior to practical usage, a consequence for the amount of the vulcanization-activating agent to the added object may have been examined. To obtain a sufficient bonding strength between the rubber member and the resin member without any considerations affecting the object to be added, the amount of the vulcanization-activating agent is, for the object comprising a rubber, not more than 2 parts by weight, for example, about 0.1 to 1.9 parts by weight (e.g., about 0.5 to 1.9 parts by weight) relative to 100 parts by weight of the rubber, and for the object comprising a resin, not more than 5 parts by weight, for example, about 0.1 to 5 parts by weight (e.g., about 3 to 5 parts by weight) relative to 100 parts by weight of the resin.

Incidentally, when the vulcanization-activating agent is added to the rubber, the proportion of the radical-generating agent relative to the vulcanization-activating agent (weight ratio) may be such that, for example, the former/ the latter is equal to about 0.3/1 to 20/1 (e.g. , about 0.5/1 to 20/1), preferably about 0.4/1 to 15/1 (e.g., about 1/1 to 15/1), and more preferably about 0.5/1 to 10/1 (e.g., about 2/1 to 10/1).

Incidentally, as described later, the vulcanization-activating agent is not necessary added to the rubber composition and/or the resin composition, and may be applied or coated on a bonding surface or site of the rubber member and/or the resin member.

[Vulcanization auxiliary]

In the present invention, to enhance the adhesion efficiency, a vulcanization auxiliary may be further used. Depending on the species of the rubber and the resin, an addition of a vulcanizing auxiliary makes bonding between the rubber member and the resin member firmer. The vulcanization auxiliary may be added to at least any one component of an unvulcanized rubber (or an unvulcanized rubber composition) and a thermoplastic resin (or a resin composition), and may be added to both of components. The vulcanization auxiliary is usually added to the thermoplastic resin in many cases. The vulcanization auxiliary may be selected depending on the species of the resin and the rubber, and includes, for example, an oligomer for the thermoplastic resin described in the above paragraphs (1) to (7) (e.g., an oligomer having a number-average molecular weight of about 100 to 1000, such as an oligomer for the polyamide-series resin or an oligomer for the polyether-series resin), a polyamine [e.g., the polyamine described in the paragraph of the above-mentioned (2) polyester-series resin], a polyol [e.g., the polyol described in the paragraph of the above-mentioned (2) polyester-series resin], a polycarboxylic acid or an acid anhydride thereof, a plural-aldehyde groups-containing compound, an epoxy compound, a nitrogen-containing resin (e.g., an amino resin), a methylol group- or alkoxymethyl group-containing compound, a polyisocyanate, and the like. These vulcanization auxiliaries may be used singly or in combination.

The preferred vulcanization auxiliary includes a compound having not less than two of an active hydrogen atom and/or sulfur atom on the average per molecule, among active atoms represented by the formula (1), for example, the oligomer for the thermoplastic resin described in the above paragraphs (1) to (7) (e.g., an oligomer for the polyamide-series resin, an oligomer for the polyether-series resin), the above-mentioned polyamine, and others.

The amount of the vulcanization auxiliary is, for example, about 0.1 to 30 parts of weight, preferably about 0.5 to 20 parts of weight, and about 1 to 15 parts of weight, relative to 100 parts of weight of the rubber and/or the resin.

(Other additives)

The resin composition may comprise a reinforcing material or reinforcer (a filler or a reinforcing agent). The reinforcing material may be a particulate reinforcer (for example, a calcium carbonate, a silica, an alumina, a magnesium carbonate, a carbon black, a white carbon, a clay, and a talc), and as the reinforcing material, a fibrous reinforcer is usually employed. The fibrous reinforcer includes, for example, a rayon fiber, a vinylon fiber, a nylon fiber (including an aromatic polyamide fiber such as an aramid fiber), a polyester fiber, an inorganic fiber (e.g., a metal fiber, a glass fiber, a carbon fiber, a whisker), and others. These reinforcers may be used singly or in combination. The amount of the reinforcer is about 1 to 50 parts by weight, and more preferably about 5 to 30 parts by weight relative to 100 parts by weight of the resin.

The resin composition (in particular a resin having a crosslinkable group) may comprise, if necessary, a crosslinking accelerator [for example, an acid, a base, a hardening (or curing) agent (e.g., an organic hardening agent, an inorganic hardening agent)].

Further, the resin composition may comprise various additives such as a stabilizer (an ultraviolet ray absorber, an antioxidant such as a phenol-series, amine-series, or phosphorus-containing antioxidant, a heat stabilizer), a colorant (or coloring agent), a plasticizer, a lubricant, a flame retardant, an antistatic agent, and others.

To the above-mentioned rubber composition may be added, if necessary, various additives, for example, a filler, a plasticizer or softening agent, a co-vulcanizing agent (e.g., a metal oxide such as zinc oxide), an age resistor (e.g., a heat resistant, an antiozonant, an antioxidant, an ultraviolet ray absorber), a tackifier, a processing auxiliary, a lubricant (e.g., stearic acid, a metal salt of stearic acid, a wax), a colorant, a foaming agent, a dispersant, a flame retardant, an antistatic agent, and so forth.

The filler (or reinforcing agent) includes, for example, a powdered or particulate filler or reinforcer (e.g., a mica, a clay, a talc, a silicic acid, a silica, a calcium carbonate, a magnesium carbonate, a carbon black, a ferrite), a fibrous filler or reinforcer (e.g., an organic fiber such as "Rayon", "Nylon", "Vinylon", and "Aramid"; an inorganic fiber such as a carbon fiber or a glass fiber), and other fillers.

The plasticizer is not particularly restricted so far as a plasticity can be imparted to the rubber composition, and includes conventional softening agents (e.g., a plant oil such as linolic acid, oleic acid, castor oil, or perm oil; a mineral oil such as a paraffin, a process oil, or an extender) and plasticizers (e.g., a phthalic acid ester, an aliphatic dicarboxylic acid ester, a sulfur-containing plasticizer, a polyester-series polymer plasticizer).

The content of the filler may for example be about 0 to 300 parts by weight, preferably about 0 to 200 parts by weight, and more preferably about 0 to 100 parts by weight relative to 100 parts by weight of the rubber. The content of the plasticizer or softening agent may for example be about 0 to 200 parts by weight, preferably about 0 to 150 parts by weight, and more preferably about 0 to 120 parts by weight, relative to 100 parts by weight of the rubber. The co-vulcanizing agent, the age resistor, the processing auxiliary or the lubricant, or the colorant, each may be used in a proportion of an effective amount, and the amount of the co-vulcanizing agent may for example be about 0 to 20 parts by weight, preferably about 0.5 to 15 parts by weight, and more preferably about 1 to 10 parts by weight relative to 100 parts by weight of the rubber.

According to the present invention, it is possible to bond or unite the resin member comprising a specific resin and the rubber member comprising the vulcanized rubber in a wide range combination, and further, if necessary, the coexistence of the vulcanization-activating agent or the vulcanization auxiliary ensures reliable and firm adhesion. Therefore, the combination of the resin and the rubber is not particularly restricted to a specific combination, and the following combinations (a) to (k) may for example be mentioned:

(a) a combination of an aliphatic polyamide-series resin and an unvulcanized rubber containing a radical-generating agent;
(b) a combination of an aromatic polyamide-series resin and an unvulcanized rubber containing a radical-generating agent;
(c) a combination of an aromatic polyester-series resin having an amino group and an oxyalkylene group and an unvulcanized rubber containing a radical-generating agent;
(d) a combination of a polyacetal-series resin and an unvulcanized rubber containing a radical-generating agent;
(e) a combination of a polyphenylene ether-series resin and an unvulcanized rubber containing a radical-generating agent;
(f) a combination of a polysulfide-series resin and an unvulcanized rubber containing a radical-generating agent;
(g) a combination of a polypropylene-series resin and an unvulcanized rubber containing a radical-generating agent;
(h) a combination of a polyurethane-series resin and an unvulcanized rubber containing a radical-generating agent;
(i) a combination of a thermoplastic elastomer and an unvulcanized rubber containing a radical-generating agent;
(j) a combination of a polyphenylene ether-series resin and an unvulcanized styrene-diene-series rubber (e.g., a styrene-butadiene rubber) containing a sulfur-containing vulcanizing agent; and
(k) a combination in any of the above combinations (a) to (j) in which at least one component of the resin and the unvulcanized rubber comprises a vulcanization-activating agent.

In such combinations, the preferred radical-generating agent includes an organic peroxide, and the preferred vulcanization-activating agent comprises a bi-or polyfunctional vulcanization-activating agent (particularly tri- or poly-functional (meth)acrylate).

In the rubber-reinforced structure of the present invention, a resin member may be directly bonded to a rubber member at high bonding strength without an adhesive, or the resin member may be bonded to the rubber member through a vulcanized rubber layer vulcanized with a vulcanizing agent. The vulcanized rubber layer may form a part of the rubber member. The vulcanized rubber layer may be formed from an unvulcanized rubber composition containing at least the rubber and the vulcanizing agent. The preferred vulcanized rubber layer may be formed from an unvulcanized rubber composition containing a vulcanization-activating agent, and if necessary a vulcanization auxiliary in addition to the rubber and the vulcanizing agent. In the unvulcanized rubber composition for forming the vulcanized rubber layer, the proportion of each component (the proportion of the vulcanizing agent, the vulcanization-activating agent, or the vulcanization auxiliary, relative to the rubber) is the same as described above.

[Rubber-reinforced structure and process for producing the same]

The rubber-reinforced structure of the present invention may comprise a composite member which comprises at least one resin member mentioned above and at least one rubber member (or rubber layer) being directly bonded to the resin member without any adhesive. Moreover, the rubber member may be a tire body. Further, an intermediate rubber layer which is formed from an unvulcanized rubber composition containing the above-mentioned vulcanizing agent (additionally a vulcanization-activating agent) may be interposed between the tire body and the resin member. The intermediate layer (further the rubber member) may be co-vulcanizable with vulcanization of the tire body. Moreover, in order to enhance adhesiveness of the tire body and the resin member, a rubber of the same species (diene-series rubber) or the same type (a rubber which has a similar molecular structure) as the tire body may be used as a rubber for the vulcanized rubber layer. Incidentally, the tire body may be formed from the above-mentioned unvulcanized rubber composition [in particular an unvulcanized rubber composition containing a sulfur-containing vulcanizing agent and a diene-series rubber (e.g. , the above-mentioned styrene-diene-series rubber)].

The resin member usually constitutes a reinforcing layer of a tire. In a side-reinforced tire, the reinforcing layer may be formed on the internal surface thereof at specified intervals, or all round. Moreover, in a core type having a support ring within the tire, an area of a support ring for bonding to the rubber, or a support ring itself may be formed with the resin member or the reinforcing layer.

Further, in the present invention, the resin member may be bonded to the rubber member or the tire body at high adhesiveness. Therefore, the resin member may be formed as an adhesive layer to at least one rubber layer or rubber member constituting the tire.

The composite member constituting the rubber-reinforced structure may be obtained by bringing a resin element for forming a resin member into contact with at least one rubber element (or rubber member), with molding as necessary, vulcanizing an unvulcanized rubber of the rubber element to bond the vulcanized rubber member to the resin member, wherein the resin element and the rubber element form a tire. The resin element may be an unmolded resin composition, a semi-molded resin member (semi-formed resin article), or a resin preformed or premolded member (or a resin molded article). Moreover, the rubber element may be an unvulcanized rubber composition, or a semi-vulcanized rubber member, which is partially vulcanized or crosslinked (premolded rubber article).

The preferred combination of the resin element and the rubber element includes the followings, as in the case mentioned above: (i) a combination of a rubber composition (or rubber element) containing a radical-generating agent and a resin composition containing a thermoplastic resin having at least two active atoms on the average per molecule, wherein each of the atoms is selected from the group consisting a hydrogen atom and a sulfur atom and has an orbital interaction energy coefficient S represented by the formula (1) of not less than 0.006; (ii) a combination of a rubber composition containing a sulfur-containing vulcanizing agent or a radical-generating agent, and a resin composition (or resin element) containing at least one resin selected from a thermoplastic resin and a resin having a crosslinkable group; and (iii) a combination of a styrene-diene-series rubber composition containing a sulfur-containing vulcanizing agent or a rubber composition containing a radical-generating agent, and a resin composition containing a polyphenylene ether-series resin. Moreover, as described above, at least one element of the resin element and the rubber element may comprise a vulcanizing agent, and the resin element may comprise a vulcanization auxiliary.

Incidentally, in the case where the vulcanizing agent is a radical-generating agent, the rubber element preferably has an active radical-generating agent and contains at least an unvulcanized rubber on the contact surface to the resin element. For example, a composite member in which a resin member (resin element) and a rubber member (rubber element) are bonded to each other may be produced by bringing a resin composition comprising a thermoplastic resin (preferably a resin composition containing at least the vulcanization-activating agent) into contact with an unvulcanized rubber composition comprising an unvulcanized rubber and a radical-generating agent (preferably an unvulcanized rubber composition further containing at least the vulcanization-activating agent) to mold these compositions, and vulcanizing or crosslinking the unvulcanized rubber composition. Moreover, in the case of using a radical-generating agent as a vulcanizing agent, at least one element of the resin element and the rubber element may be premolded as far as the radical-generating agent is active.

For example, (1) a composite member may be produced by bringing a resin member (premolded or molded resin member) into contact with an unvulcanized rubber composition, and then molding the unvulcanized rubber composition with vulcanizing or crosslinking the unvulcanized rubber composition; (2) a composite member may be produced by bringing the resin composition into contact with a premolded rubber article formed by preliminarily vulcanizing or crosslinking the rubber composition, and molding the resin composition; and (3) a composite member may be produced by bringing a premolded rubber article formed by vulcanizing or crosslinking the rubber composition into contact with a resin member (a premolded or molded resin member). Incidentally, the premolded rubber article may have an activity at least on a surface contacted with the molded resin member or element, and may have a residual radical-generating agent.

More concretely, the process of the present invention includes a process which comprises contacting or meeting (or converging) a resin composition with an unvulcanized rubber composition with molding the resin composition and the unvulcanized rubber composition respectively to bond or adhere directly the resin member and the vulcanized rubber member (one-step method); a process which comprises contacting a preliminary molded or formed resin member (a premolded or molded resin member) with an unvulcanized rubber composition, and vulcanizing or crosslinking the unvulcanized rubber composition with molding to join or bond the resin member and the vulcanized rubber member (two-step method); a process comprising a step for contacting a preliminary molded resin member (a premolded or molded resin member) with a preformed rubber article formed by partially molding (or partially vulcanizing or crosslinking) an unvulcanized rubber composition, and a step for vulcanizing or crosslinking the premolded rubber article to bond or adhere the resin member and the vulcanized rubber member (three-step method); and other molding methods.

The preferred process includes the one-step method and the two-step method(particularly the two-step method). In the one-step method, a composite molded article can be obtained by melting and kneading the resin composition and the unvulcanized rubber composition, respectively, injecting or extruding the molten and kneaded compositions into a metal mold having a desired cavity or configuration with use of, for example, a conventional multi-molding apparatus (e.g., a multi-injection molding apparatus, a multilayer extruder), and vulcanizing or crosslinking the unvulcanized rubber on or after the molding. The resin composition and the unvulcanized rubber composition may be mixed or mingled at (or in) the contact interface area between these compositions.

In the two-step method, a conventional molding apparatus (e.g., an injection molding apparatus, an extrusion molding apparatus, a thermal-press molding apparatus) can be used for molding the resin member, and a conventional molding apparatus (e.g., an injection molding apparatus, a press molding apparatus, a transfer molding apparatus, an extrusion molding apparatus) can be used for molding the rubber member. For example, a vulcanized rubber member and a resin member may be bonded or adhered by placing or setting a resin member into a mold (or a cavity) in conformity with a configuration of a composite, injecting or extruding an unvulcanized rubber composition on the resin member, and vulcanizing or crosslinking the unvulcanized rubber composition. Moreover, when the shape of the composite member is a plate-or sheet-like member having a two-dimensional configuration, the composite may be produced by laminating a plate- or sheet-like unvulcanized rubber composition on a resin member, and vulcanizing or crosslinking the unvulcanized rubber composition without the mold (or cavity). Incidentally, when contacting (e.g., closely contacting or adhering) a resin member (or a resin composition) with an unvulcanized rubber composition, a pressure molding may be conducted by applying a pressure suitably or may be conducted under a reduced pressure with use of a thermalpress molding or an injection molding in order to remove a volatile component or a gas component from the unvulcanized rubber composition.

The vulcanization (or curing) or crosslinking temperature (or a bonding temperature between the rubber member and the resin member) may for example be selected from about 70 to 250°C, preferably about 100 to 230°C, and more preferably about 150 to 220°C. The pressure loaded to the rubber and the resin may for example be selected from within the range of about 0.1 to 350 MPa, preferably about 1 to 150 MPa, and more preferably about 2 to 100 MPa.

The process of the present invention also includes a process for producing a composite member by molding a resin element (resin member) and a rubber element (unvulcanized rubber member) under heating with at least the vulcanization-activating agent (if necessary, the vulcanizing agent, and further the vulcanization auxiliary) interposing contacting surfaces (or bonding surfaces) between the resin element and the rubber element to bond or adhere the resin member and the rubber member. In the process, the vulcanized rubber member is not necessary vulcanized or crosslinked by the radical-generating agent (e.g., an organic peroxide), and may be vulcanized with use of a sulfur-containing vulcanizing agent. In the preferred process, the molded resin member may be used in combination with a molded rubber member (a vulcanized rubber member obtained from an unvulcanized rubber composition comprising at least a radical-generating agent and an unvulcanized rubber).

Further, between the resin member and the vulcanized rubber member, a coating agent comprising at least the vulcanization-activating agent (if necessary, further the vulcanization auxiliary) may be interposed by coating on the contact surface (or binding surface), and the coating agent may be a radically active agent comprising the vulcanizing agent and the vulcanization-activating agent (if necessary, further the vulcanization auxiliary). Furthermore, between the resin element (resin member) and the rubber element (vulcanized rubber member), the unvulcanized rubber composition for forming the vulcanized rubber layer may be applied on the contact surface (or interface) and vulcanized to interpose the resultant vulcanized layer between the resin member and the rubber member. The unvulcanized rubber composition may be in the form of a coating agent or others. The amount of the coating agent on the interface or bonding surface between the resin member and the vulcanized rubber member may for example be about 0.1 to 10 g/m$^2$, preferably about 0.5 to 5 g/m$^2$, and particularly about 1 to 5 g/m$^2$.

The composite member comprising the resin member and the rubber member bonded to the resin member can be obtained by heating (in particular, heat-pressing) the resin member and the vulcanized rubber member with interposing the above-mentioned coating agent between these members. The heating temperature and pressure may be selected within the range similar to the vulcanization or crosslinking temperature and pressure mentioned above.

Moreover, as the process of the invention, it is also effective that a surface of the resin member (semi-molded resin member or molded resin member) is treated with a solvent capable of dissolving or swelling the resin member by a treatment such as coating or dipping, and the treated surface is contacted with the rubber element. The solvent may be selected, depending on species of the resin member and includes, for example, a hydrocarbon (e.g., an aliphatic hydrocarbon such as hexane or octane, an alicyclic hydrocarbon such as cyclohexane, an aromatic hydrocarbon such as toluene or xylene), an alcohol (e.g., an alcohol such as isopropanol, butanol, or cyclohexanol; a haloalkylalcohol such as tetrafluoroethanol or hexafluoroisopropanol), a phenol compound (e.g., phenol, cresol), an organic acid (e.g., formic acid, acetic acid, trifluoroacetic acid, trichloroacetic acid), an ester (e.g., ethyl acetate, butyl acetate), a ketone (e.g., acetone, methyl ethyl ketone, methyl isobutyl ketone), an ether (e.g., dioxane, diethyl ether, tetrahydrofuran), a sulfoxide (e.g., dimethyl sulfoxide), an amide (e.g., dimethylformamide, dimethylacetoamide), and a mixed solvent thereof.

For example, for a resin comprising a polyamide resin, a solvent such as a phenol compound (e.g., phenol, cresol), an organic acid (e.g. , formic acid), a ketone (e.g., hexafluoroacetone), an alcohol (e.g., hexafluoroisopropyl alcohol) may be coated singly or in combination with a conventional solvent on the contacting surface with the rubber member. Moreover, for example, for a resin comprising a polyphenylene ether resin, as the solvent or swelling agent, there may be exemplified with a hydrocarbon (e.g., toluene), a ketone (e.g., acetone, methyl ethyl ketone, hexafluoroacetone), an ether (e.g., tetrahydrofuran), an amide (e.g., dimethylformamide), an alcohol (e.g., hexafluoroisopropyl alcohol), and so on.

After treating the resin member with the solvent, even if the solvent is removed from the resin member by washing, drying, or other methods, the firm bonding of the vulcanized rubber member to the resin member can be realized by contacting the treated surface of the resin member with the unvulcanized rubber composition or semi-vulcanized rubber member to vulcanize the unvulcanized rubber.

According to the present invention, by using a specific resin composition in combination with a rubber composition, a tire can be effectively reinforced with a resin member without any adhesive. Moreover, a reinforcing member which comprises a resin or a composite member of a resin firmly bonded to a rubber can be firmly bonded to a tire body (or rubber member).

INDUSTRIAL APPLICABILITY

In the composite member of the present invention, a rubber member and a resin member are bonded to each other at significantly high strength. Therefore, the composite member is suitably applicable for various tires, in particular a run-flat tire.

EXAMPLES

The following examples are intended to describe this invention in further detail and should by no means be interpreted as defining the scope of the invention.

In Examples and Comparative Examples, the following materials were used.

[Resin composition]

Resin compositions (A1) to (A5)

PA612 (A1); Resin composition (A1)

A predetermined amount of hexamethylenediamine was added to 80% by weight aqueous solution of a salt of hexamethylenediamine with dodecanedicarboxylic acid, and the mixture was heated at 220°C under an applied pressure (17.5 kg/cm$^2$) in an autoclave substituted with nitrogen gas to flow out water with nitrogen gas from the inside to the outside of the reaction system over 4 hours. Subsequently, the temperature of the system was gradually raised to 275 °C over 1 hour to discharge a residual water in the system, and the applied pressure in the autoclave was reduced to be an atmospheric pressure. After cooling the system, a polyamide 612 was obtained. The obtained polymer had a number average molecular weight (Mn) of about 20,000 and a ratio of terminal amino group/terminal carboxyl group being about 9/1. The polymer was used alone for Resin composition (A1).

PA612 (A2): Resin composition (A2)

An aqueous solution containing a salt of hexamethylenediamine with dodecanedicarboxylic acid in an amount of 80% by weight was heated at 220°C under an applied pressure (17.5 kg/cm$^2$) in an autoclave substituted with nitrogen gas to flow out water with nitrogen gas from the reaction system over 4 hours. Subsequently, the temperature of the system was gradually increased to 275 °C over 1 hour to remove water remaining in the system, and the applied pressure of the autoclave was reduced to be an atmospheric pressure. After cooling the system, a polyamide 612 was obtained. The polymer had a number average molecular weight (Mn) of about 20000 to 25000, and a ratio of terminal

23

amino group/terminal carboxyl group being about 1/1. The polymer was used alone for Resin composition (A2).

PA612 (A3): Resin composition (A3)

The resin composition (A1) and the following resin composition (A5) were kneaded in a weight ratio of 1/3 (the former/the latter) by a biaxial extruder. This composition was used alone as Resin composition (A3). The ratio of terminal amino group/terminal carboxyl group in the resin composition (A3) was about 3/7.

PA612 (A4): Resin composition (A4)

With 100 parts by weight of the resin composition (A3) was mixed 3 parts by weight of trimethylolpropane trimethacrylate (TRIM) by a biaxial extruder to give Resin composition (A4).

PA612 (A5): Resin composition (A5)

To an aqueous solution containing a salt of hexamethylenediamine with dodecanedicarboxylic acid in an amount of 80% by weight was added a predetermined amount of dodecanedicarboxylic acid, and the mixture was heated at 220°C under an applied pressure (17.5 kg/cm$^2$) in an autoclave substituted with nitrogen gas to remove water with nitrogen gas from the reaction system over 4 hours. Subsequently, the temperature of the system was gradually elevated to 275°C with taking 1 hour to discharge a residual water in the system, and the applied pressure of the autoclave was reduced to be an atmospheric pressure. After cooling, a polyamide 612 was obtained. The obtained polymer had a number average molecular weight (Mn) of about 20000 and a ratio of terminal amino group/terminal carboxyl group being about 1/9. The polymer was used alone for Resin composition (A5).
Incidentally, about the resin compositions (A1) to (A5), an MOPACPM3 calculation was carried out according to the following basic unit:

$$NH_2\text{-}(CH_2)_6\text{-}NH\text{-}C(=O)\text{-}(CH_2)_{10}\text{-}C(=O)\text{-}OH$$

Resin compositions (B1) and (B2)

PA66 (B1): Resin composition (B1)

A preparation procedure was conducted in the same manner as in the resin composition (A2) except for using hexamethylenediamine in combination with adipic acid to give a polyamide 66 having a number average molecular weight (Mn) of 20000 to 25000 and a ratio of terminal amino group/terminal carboxyl group being about 1/1. The obtained resin was used alone as Resin composition (B1).

PA66 (B2): Resin composition (B2)

A preparation procedure was conducted in the same manner as in the resin composition (A4) except for using a monomer combination of hexamethylenediamine and adipic acid to obtain a polyamide 66 having a number average molecular weight (Mn) of about 20000 and a ratio of terminal amino group/terminal carboxyl group being about 1/9. The polymer and the resin composition (B1) were kneaded in a weight ratio of 62.5/37.5 by a biaxial extruder to give Resin composition (B2). The ratio of terminal amino group/terminal carboxyl group in the resin composition (B2) was about 1/3.
Incidentally, about the resin compositions (B1) and (B2), an MOPACPM3 calculation was carried out for the following basic unit:

$$NH_2\text{-}(CH_2)_6\text{-}NH\text{-}C(=O)\text{-}(CH_2)_4\text{-}C(=O)\text{-}OH$$

Resin compositions (C1) to (C4)

PA6 (C1): Resin composition (C1)

An aqueous solution containing ε-caprolactam in an amount of 80% by weight was heated at 250 to 260°C in the presence of a small amount of phosphoric acid in an autoclave substituted with nitrogen gas to remove water with nitrogen gas from the reaction system over 4 hours. Subsequently, the temperature of the inside system was gradually elevated to 275°C for taking 1 hour to remove a residual water to outside system. After cooling, a polyamide 6 was obtained. The obtained polymer had a number average molecular weight (Mn) of about 20000 to 25000 and a ratio of terminal amino group/terminal carboxyl group being about 1/1. The polymer was used alone for Resin composition (C1).

PA6 (C2): Resin composition (C2)

A predetermined amount of adipic acid was added to an aqueous solution containing ε-caprolactam in an amount of 80% by weight, and the mixture was heated at 250 to 260°C in the presence of a small amount of phosphoric acid in an autoclave substituted with nitrogen gas to flow out water with nitrogen gas from the reaction system over 4 hours. The temperature of the system was gradually raised to 275°C with taking 1 hour to remove a residual water from the system. After cooling, a polyamide 6 was obtained. The obtained polymer had a number average molecular weight (Mn) of about 20000 and a ratio of terminal amino group/terminal carboxyl group being about 1/9. The polymer was used for Resin composition (C5). The resin composition (C5) and the resin composition (C1) were kneaded in a weight ratio of 37.5/62.5 (the former/the latter) to give Resin composition (C2). The ratio of terminal amino group/terminal carboxyl group in the resin composition (C2) was about 1/3.

PA6 (C3): Resin composition (C3)

With 100 parts by weight of the resin composition (C2) was mixed 3 parts by weight of trimethylolpropane trimethacrylate (TRIM) by a biaxial extruder to give Resin composition (C3).

PA6 (C4): Resin composition (C4)

The resin composition (C1) and the resin composition (C5) were kneaded in a weight ratio of 25/75 (the former/the latter) to give Resin composition (C4). The ratio of terminal amino group/terminal carboxyl group in the resin composition (C4) was about 1/4.

Incidentally, about the above-mentioned resin compositions (C1) to (C4), a calculation with MOPACPM3 was carried out with use of the following unit as a basic unit:

$$NH_2\text{-}(CH_2)_5\text{-}C(=O)\text{-}NH\text{-}(CH_2)_5\text{-}C(=O)\text{-}OH$$

Resin compositions (D1) to (D3)

Trogamid T500 (D1): Resin composition (D1)

A preparation procedure was conducted in the same manner as in the resin composition (A2) except for using trimethylhexamethylenediamine in combination with terephthalic acid to give a polymer having a number average molecular weight (Mn) of 20000 to 25000 and a ratio of terminal amino group/terminal carboxyl group being about 1/1. The obtained resin was used alone as Resin composition (D1).

Trogamid T500 (D2): Resin composition (D2)

A preparation procedure was conducted in the same manner as in the resin composition (A5) except for using trimethylhexamethylenediamine in combination with terephthalic acid to give a polymer having a number average molecular weight (Mn) of about 20000 and a ratio of terminal amino group/terminal carboxyl group being about 1/9. The obtained resin was used alone as Resin composition (D4). The resin composition (D4) and the resin composition (D1) were kneaded in a weight ratio of 62.5/37.5 (the former/the latter) by a biaxial extruder to give Resin composition (D2). The ratio of terminal amino group/terminal carboxyl group in the resin composition (D2) was about 1/3.

Trogamid T500 (D3): Resin composition (D3)

The resin composition (D1) and the resin composition (D4) were kneaded in a weight ratio of 25/75 (the former/the latter) to give Resin composition (D3). The ratio of terminal amino group/terminal carboxyl group in the resin composition (D3) was 1/4.

Incidentally, a calculation with MOPACPM3 was carried out with use of the following unit as a basic unit:

$$H_2N-[\{(CH_3)-CH\}-CH_2]_3-NH-(CO)-(C_6H_4)-COOH$$

Resin compositions (E1) and (E2)

PBT (E1): Resin composition (E1)

A reactor equipped with a nitrogen-introducing tube and a distillation side tube was charged with 14.587 kg of dimethyl terephthalate, 6.767 kg of 1,4-butanediol, 30 g of calcium acetate, and 60 g of antimony oxide. The mixture was heated at 180°C, and nitrogen gas was supplied to the reactor little by little. At the point of confirming an effluent of methanol, the mixture was gradually heated to 270°C under a reduced pressure with stirring to reach degree of vacuum of not more than 100 Pa. After confirming an effluent of ethylene glycol, the mixture was heated at 270°C for 3 hours. The resultant was allowed to stand for cooling. The obtained polymer was used for Resin composition (E1). The ratio of terminal hydroxyl group/terminal carboxyl group in the resin composition (E1) was about 1/1.

PBT (E2): Resin composition (E2)

Resin composition (E2) was obtained by kneading the resin composition (E1) and an equimolar hexamethylenediamine relative to a carboxylic group containing in the resin composition (E1) at 230°C for 30 minutes with use of a kneader. The ratio of terminal hydroxyl group/terminal amino group in the resin composition (E2) was about 1/1.
Incidentally, about the resin compositions (E1) and (E2), a calculation with MOPACPM3 was carried out with use of the following unit as a basic unit:

$$PBT\ (E1):\ HO-(CH_2)_4-O-(CO)-(C_6H_4)-COOH$$

$$PBT\ (E2):\ NH_2-(CH_2)_6-NH-(CO)-(C_6H_4)-(CO)-O-(CH_2)_4-OH$$

PPE
PPE (F1): A resin composition was prepared with a polyphenylene ether-series resin ("Vestoran 1900" (manufactured by Degussa AG) alone. Incidentally, a calculation with MOPACPM3 was carried out according to the following unit as a basic unit:

$$\{(CH_3)-C_6H_3\}_2-O-\{(CH_3)-C_6H_2\}_2-O-\{(CH_3)-C_6H_2\}_2-OH$$

PPS
PPS (G1): A resin composition was prepared with a polyphenylene sulfide-series resin ("Fortlon 0220A9 (unfilled product) "manufactured by Polyplastics Co. Ltd.) alone. Incidentally, a calculation with MOPACPM3 was carried out according to the following unit as a basic unit:

$$Cl-C_6H_4-S-C_6H_4-S-C_6H_4-Cl$$

[Unvulcanized rubber composition]

(Rubber component)

   EPDM: "Keltan 509 x 100" manufactured by DSM
   H-NBR: "Zetpol 2010 " manufactured by Zeon Corporation SBR: "JSR 0202" manufactured by JSR Corporation (styrene content: 46%)
   NR: made in Thailand, #3
   NBR: "Nipol 1042" manufactured by Zeon Corporation

(Additive)

Poly(cyclooctenemer) (VN8012): "Vestenamer 8012" manufactured by Degussa AG.
Carbon black FEF (CB FEF): "Carbon black N582" manufactured by Asahi Carbon Co., Ltd.
DCPO: dicumyl peroxide
TMTDS: tetramethylthiuram disulfide
TRIM: trimethylolpropane trimethacrylate S: sulfur powder [powdered sulfur (Kinka-jirushi fine powdered sulfur) manufactured by Tsurumi Kagaku Kogyo K.K.]
Naphthenic oil: "Diana Process Oil NS100" manufactured by Idemitsu Kosan Co., Ltd.
Paraffin oil: "Diana Process Oil PW380" manufactured by Idemitsu Kosan Co., Ltd.
Stabilizer: "Suntight Z" manufactured by Seiko Chemical Co., Ltd.
Stabilizer: "Santogard PVI" manufactured by Flexsys Corporation
Vulcanization accelerator: "Nocceler TS" manufactured by Ouchishinko Chemical Industrial Co., Ltd.
Zinc oxide (ZnO)
Stearic acid (St-COOH)

Examples and Comparative Examples

The resin composition was injection molded, and the obtained resin member (plate, size: 100mm x 100mm x 4mm) was arranged in a mold. Subsequently, the unvulcanized rubber compositions (R1) to (R7) in a proportion (parts by weight) described in Tables were injection molded to the surface of the molded resin member, respectively. The resultant products were subjected to vulcanization or crosslinking at a temperature of 180°C under a pressure of 20 MPa for 20 minutes to produce composite members. The peeling test was carried out on each of the obtained composite members in order to measure an adhesive strength between the resin member and the rubber member, and the adhesive strength was evaluated according to the following criteria.
"A": The resin member remarkably firmly adheres to the rubber member, and the composite member is broken with cohesive failure.
"B": The resin member firmly adheres to the rubber member, although the resin member is separated from the rubber member along the interface.
"C": The rubber member is easily separated from the resin member along the interface.
The results are set forth in Tables 1 and 2. In the Tables, the number of atoms shows the number of the active atom of the resin calculated based on MOPACPM3. Moreover, in the Tables, combinations in which the evaluation of the adhesive strength corresponds to "C" are qualified as Comparative Examples.
As apparent from Tables 1 and 2, in Comparative Examples, the rubber member was easily separated from the resin member along the interface. On the other hand, in Examples, the rubber member was firmly bonded to the resin member along the interface.

Table 1

|  | R1/EP | R2/EP | R3/EP | R4/H-NBR |
|---|---|---|---|---|
| Rubber | EPDM 90 | EPDM 90 | EPDM 90 | H-NBR |
| VN 8012 | 10 | 10 | 10 | 0 |
| CB FEF | FEF 1 | FEF 1 | FEF 1 | FEF 50 |
| Vulcanizing agent | DCPO 2.5 | DCPO 2.5 | TMTDS 3 | DCPO 2.5 |
| Vulcanization-activating agent | 0 | TRIM 1 | TRIM 1 | 0 |
| Oil | naphthenic 5 paraffinic 15 | naphthenic 5 paraffinic 15 | naphthenic 5 paraffinic 15 |  |
| ZnO | 5 | 5 | 5 | 5 |
| St-COOH | 1 | 1 | 1 | 1 |
| Stabilizer |  |  |  |  |

Table 1  (continued)

| | R1/EP | R2/EP | R3/EP | R4/H-NBR |
|---|---|---|---|---|
| Vulcanization accelerator | | | | |
| PA612 | | | | |
| (A1) $NH_2$/COOH=9/1 | 7.2 pcs/A | 7.2 pcs/A | 0 pcs/C | |
| (A2) $NH_2$/COOH=1/1 | 4 pcs/A | 4 pcs/A | 0 pcs/C | |
| (A3) $NH_2$/COOH=3/7 | 2.4 pcs/B | 2.4 pcs/A | 0 pcs/C | 2.4 pcs/B |
| (A4) $NH_2$/COOH=3/7 TRIM 3 | 2.4 pcs/A | 2.4 pcs/A | | 2.4 pcs/A |
| (A5) $NH_2$/COOH=1/9 | 0.8 pcs/C | 0.8 pcs/C | 0 pcs/C | 0.8 pcs/C |
| PA66 | | | | |
| (B1) $NH_2$/COOH=1/1 | 2 pcs/B | 2 pcs/A | 0 pcs/C | 2 pcs/A |
| (B2) $NH_2$/COOH=1/3 | 1 pcs/C | 1 pcs/C | 0 pcs/C | 1 pcs/C |
| PA6 | | | | |
| (C1) $NH_2$/COOH=1/1 | 7.2 pcs/A | 7.2 pcs/A | 2 pcs/B | |
| (C2) $NH_2$/COOH=1/3 | 2 pcs/B | 2 pcs/A | 1 pcs/C | |
| (C3) $NH_2$/COOH=1/3 TRIM 3 | 2 pcs/A | | | 2 pcs/A |
| (C4) $NH_2$/COOH=1/4 | 1.6 pcs/C | 1.6 pcs/C | 0.8 pcs/C | |
| Trogamid T500 | | | | |
| (D1) $NH_2$/COOH=1/1 | 3 pcs/A | 3 pcs/A | 1 pcs/C | |
| (D2) $NH_2$/COOH=3/7 | 2 pcs/B | 2 pcs/A | 0.7 pcs/C | 2 pcs/B |
| (D3) $NH_2$/COOH=1/9 | 1.2 pcs/C | 1.2 pcs/C | 0.4 pcs/C | 1.2 pcs/C |
| PBT | | | | |
| (E1) | 0 pcs/C | 0 pcs/C | 0 pcs/C | |
| (E2) | 4 pcs/A | 4 pcs/A | 2 pcs/B | |
| PPE | | | | |
| (F1)Vestoran 1900 | 6 pcs or more /B | 6 pcs or more /A | 0 pcs/C | |
| PPS | | | | |
| (G1) | 2 pcs or more /B | 2 pcs or more /B | 2 pcs or more /B | |

Table 2

| | R5/SBR | R6/SBR/NR | R7/SBR/NBR |
|---|---|---|---|
| Rubber | SBR 100 | SBR 60 NR 40 | SBR 60 NBR 40 |
| VN 8012 | 0 | 0 | 0 |
| CB FEF | FEF 50 | FEF 50 | FEF 50 |
| Vulcanizing agent | S 2 | S 2 | S 2 |
| Vulcanization-activating agent | 0 | 0 | 0 |
| Oil | naphthenic 10 | naphthenic 10 | naphthenic 10 |

Table 2   (continued)

|  | R5/SBR | R6/SBR/NR | R7/SBR/NBR |
|---|---|---|---|
| ZnO | 5 | 5 | 5 |
| St-COOH | 1 | 1 | 1 |
| Stabilizer | Suntight Z 1 Santogard PVI 0.2 | Suntight Z 1 Santogard PVI 0.2 | Suntight Z 1 Santogard PVI 0.2 |
| Vulcanization accelerator | Nocceler TS 0.3 | Nocceler TS 0.3 | Nocceler TS 0.3 |
| PPE |  |  |  |
| (F1)Vestoran 1900 | 0 pcs/A | 0 pcs/A | 0 pcs/A |

## Claims

1. A rubber-reinforced structure which comprises at least one resin member comprising a resin composition, and at least one rubber layer or rubber member being directly bonded to the resin member without any adhesive, wherein the resin member and the rubber layer or rubber member form a tire, the rubber layer or rubber member comprises a rubber composition vulcanized with a radical-generating agent, the resin member comprises a thermoplastic resin having at least two active atoms on the average per molecule, and each of the atoms is selected from the group consisting of a hydrogen atom and a sulfur atom and has an orbital interaction energy coefficient S of not less than 0.006,

   wherein the orbital interaction energy coefficient S is represented by the following formula (1):

$$S=(C_{HOMO,n})^2/|E_c\text{-}E_{HOMO,n}|+(C_{LUMO,n})^2/|E_c\text{-}E_{LUMO,n}| \qquad (1)$$

   in the formula, each of factors, $E_c$, $C_{HOMO,n}$, $E_{HOMO,n}$, $C_{LUMO,n}$, and $E_{LUMO,n}$ represents a value calculated by a semiempirical molecular orbital method MOPACPM3, $E_c$ representing an orbital energy (eV) of a radical of the radical-generating agent as a vulcanizing agent, $C_{HOMO,n}$ representing a molecular-orbital coefficient of the highest occupied molecular orbital (HOMO) of an n-th active atom constituting a basic unit of the thermoplastic resin, $E_{HOMO,n}$ representing an orbital energy (eV) of the HOMO, $C_{LUMO,n}$ representing a molecular-orbital coefficient of the lowest unoccupied molecular orbital (LUMO) of the n-th active atom constituting the basic unit of the thermoplastic resin, and $E_{LUMO,n}$ representing an orbital energy (eV) of the LUMO.

2. A rubber-reinforced structure which comprises at least one resin member comprising a resin composition, and at least one rubber member being directly bonded to the resin member without any adhesive, wherein the resin member and the rubber member form a tire, the rubber member comprises a rubber composition vulcanized with a sulfur-containing vulcanizing agent or a radical-generating agent, and the resin member comprises at least one member selected from the group consisting of a thermoplastic resin and a resin having a crosslinkable group.

3. A rubber-reinforced structure according to claim 2, wherein the rubber member comprises a styrene-diene-series rubber composition vulcanized with a sulfur-containing vulcanizing agent or a rubber composition vulcanized with a radical-generating agent, and the resin member comprises a polyphenylene ether-series resin composition.

4. A rubber-reinforced structure according to any one of claims 1 to 3, wherein the resin member comprises a reinforcing layer of the tire.

5. A rubber-reinforced structure according to any one of claims 1 to 3, wherein the resin member forms an adhesive layer to at least one rubber layer or rubber member constituting the tire.

6. A rubber-reinforced structure according to any one of claims 1 to 3, wherein the resin member is bonded to the rubber member through a vulcanized rubber layer vulcanized with a vulcanizing agent.

7. A rubber-reinforced structure according to any one of claims 1 to 3, wherein the thermoplastic resin comprises at least one member selected from the group consisting of a polyamide-series resin, a polyester-series resin, a poly(thio)ether-series resin, a polycarbonate-series resin, a polyimide-series resin, a polysulfone-series resin, a polyurethane-series resin, a polyolefinic resin, a halogen-containing vinyl-series resin, a styrenic resin, a (meth)acrylic resin, and a thermoplastic elastomer.

8. A rubber-reinforced structure according to any one of claims 1 to 3, wherein the thermoplastic resin comprises at least one member selected from the group consisting of an aliphatic polyamide-series resin, an aromatic polyester-series resin, a polyacetal-series resin, a polyphenylene ether-series resin, a polysulfide-series resin, a polyurethane-series resin, a polyolefinic resin, a polyamide-series elastomer, a polyester-series elastomer, a polyurethane-series elastomer, a polystyrenic elastomer, and a polyolefinic elastomer.

9. A rubber-reinforced structure according to claim 2, wherein the resin having a crosslinkable group comprises at least one member selected from the group consisting of a thermosetting resin, and a thermoplastic resin having an unsaturated bond.

10. A rubber-reinforced structure according to any one of claims 1 to 3, wherein the rubber vulcanizable with the radical-generating agent comprises at least one member selected from the group consisting of a diene-series rubber, an olefinic rubber, an acrylic rubber, a fluorine-containing rubber, a silicone-series rubber, and a urethane-series rubber.

11. A rubber-reinforced structure according to any one of claims 1 to 3, wherein the radical-generating agent comprises at least one member selected from the group consisting of an organic peroxide, an azo compound, and a sulfur-containing organic compound.

12. A rubber-reinforced structure according to claim 1 or 2, wherein at least one member selected from the group consisting of the rubber member and the resin member is formed from a composition containing a vulcanization-activating agent.

13. A rubber-reinforced structure according to claim 12, wherein the vulcanization-activating agent has a plurality of polymerizable groups.

14. A rubber-reinforced structure according to claim 12, wherein the amount of the vulcanization-activating agent is 0.1 to 10 parts by weight relative to 100 parts by weight of the rubber or the resin.

15. A rubber-reinforced structure according to claim 12, wherein the amount of the vulcanization-activating agent is not more than 2 parts by weight relative to 100 parts by weight of the rubber.

16. A process for producing a rubber-reinforced structure which comprises bringing a resin element for forming a resin member into contact with at least one rubber element, wherein the resin element is selected from the group consisting of an unmolded resin composition, a semi-molded resin member and a molded resin member, the rubber element is selected from the group consisting of an unvulcanized rubber composition and a semi-vulcanized rubber member, and the resin member and the rubber element form a tire,
vulcanizing an unvulcanized rubber of the rubber element to bond the formed vulcanized rubber member to the resin member,
wherein the resin element and the rubber element are used in any one of the following combinations:

(i) a combination of a rubber element containing a radical-generating agent, and a resin element containing a thermoplastic resin having at least two active atoms on the average per molecule, wherein each of the atoms is selected from the group consisting of a hydrogen atom and a sulfur atom and has an orbital interaction energy coefficient S represented by the formula (1) recited in claim 1 of not less than 0.006;
(ii) a combination of a rubber composition containing a sulfur-containing vulcanizing agent or a radical-generating agent, and a resin composition containing at least one resin selected from a thermoplastic resin and a resin having a crosslinkable group; or
(iii) a combination of a styrene-diene-series rubber composition containing a sulfur-containing vulcanizing agent or a rubber composition containing a radical-generating agent, and a resin composition containing a polyphenylene ether-series resin.

17. A process according to claim 16, wherein at least one element of the resin element and the rubber element contains a vulcanization-activating agent.

**18.** A process according to claim 16, wherein the resin element comprises a vulcanization auxiliary comprising a compound having at least two active atoms on the average per molecule, wherein each of the atoms is selected from the group consisting of a hydrogen atom and a sulfur atom and has an orbital interaction energy coefficient S represented by the formula (1) recited in claim 1 of not less than 0.006.

**19.** A process according to claim 16, wherein the resin element and the rubber element are heat-molded with a vulcanization-activating agent interposing therebetween to bond the formed resin member to the formed rubber member.

**20.** A process according to claim 16, wherein the resin element and the rubber element are heat-molded with a coating layer containing a vulcanization-activating agent and a vulcanization auxiliary interposing on the contact surface of the resin element with the rubber element to bond the formed resin member to the formed rubber member, wherein the vulcanization auxiliary comprises a compound having at least two active atoms on the average per molecule, wherein each of the atoms is selected from the group consisting of a hydrogen atom and a sulfur atom and has an orbital interaction energy coefficient S represented by the formula (1) recited in claim 1 of not less than 0.006.

**21.** A process for producing a rubber-reinforced structure, which comprises a step for bonding a resin member to at least one rubber element, wherein the resin member is selected from the group consisting of a semi-molded resin member and a molded resin member, the rubber element is selected from the group consisting of an unvulcanized rubber composition and a semi-vulcanized rubber member, and the resin member and the rubber element form a tire, and the bonding step comprises treating the surface of the resin member with a solvent capable of dissolving or swelling the resin member, bringing the treated surface of the resin member into contact with the rubber element, and vulcanizing an unvulcanized rubber of the rubber component to bond the vulcanized and formed rubber member to the resin member.

## INTERNATIONAL SEARCH REPORT

| | International application No. |
|---|---|
| | PCT/JP03/08570 |

A. CLASSIFICATION OF SUBJECT MATTER
   Int.Cl⁷ B60C1/00//B32B25/08, C08J5/12, C08L21:00, 101:00

According to International Patent Classification (IPC) or to both national classification and IPC

B. FIELDS SEARCHED

Minimum documentation searched (classification system followed by classification symbols)
   Int.Cl⁷ B60C1/00, 5/14, 13/00, 15/06, 17/00

Documentation searched other than minimum documentation to the extent that such documents are included in the fields searched
   Jitsuyo Shinan Koho          1926-1996   Toroku Jitsuyo Shinan Koho   1994-2003
   Kokai Jitsuyo Shinan Koho    1971-2003   Jitsuyo Shinan Toroku Koho   1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 8-217923 A  (The Yokohama Rubber Co., Ltd.),<br>27 August, 1996 (27.08.96),<br>Claims; Par. Nos. [0001], [0013], [0026], [0027]<br>(Family: none) | 1-3,6-18<br>4,5,19-21 |
| X<br>A | JP 7-149108 A  (The Yokohama Rubber Co., Ltd.),<br>13 June, 1995 (13.06.95),<br>Claims; Par. Nos. [0026], [0027], [0035]<br>(Family: none) | 1-3,6-18<br>4,5,19-21 |
| X<br><br>A | JP 9-216502 A  (The Yokohama Rubber Co., Ltd.),<br>19 August, 1997 (19.08.97),<br>Claims; Par. Nos. [0001], [0015] to [0020],<br>[0026], [0028]<br>(Family: none) | 1,2,6-8,<br>10-15<br>3-5,9,16-21 |

☒  Further documents are listed in the continuation of Box C.     ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 October, 2003 (31.10.03) | 18 November, 2003 (18.11.03) |

| Name and mailing address of the ISA/<br>   Japanese Patent Office | Authorized officer |
|---|---|
| Facsimile No. | Telephone No. |

Form PCT/ISA/210 (second sheet) (July 1998)

**INTERNATIONAL SEARCH REPORT**

| International application No. |
| --- |
| PCT/JP03/08570 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>A | JP 7-52605 A (The Yokohama Rubber Co., Ltd.),<br>28 February, 1995 (28.02.95),<br>Claims; Par. Nos. [0001], [0013], [0016]<br>(Family: none) | 1,2,5-8,<br>10-18<br>3,4,9,19-21 |
| X<br>A | JP 6-40207 A (The Yokohama Rubber Co., Ltd.),<br>15 February, 1994 (15.02.94),<br>Claims; Par. Nos. [0006], [0010], [0011]<br>(Family: none) | 1-3,5-8,<br>10-15<br>4,9,16-21 |
| X<br>A | JP 5-169909 A (The Yokohama Rubber Co., Ltd.),<br>09 July, 1993 (09.07.93),<br>Claims; Par. Nos. [0003], [0005] to [0014]<br>(Family: none) | 1,2,4-8,<br>10-18<br>3,9,19-21 |
| X<br>A | JP 9-272314 A (Bridgestone Corp.),<br>21 October, 1997 (21.10.97),<br>Claims; Par. No. [0016]<br>(Family: none) | 1,2,4,6,7,<br>9-18<br>3,8,19-21 |
| X<br>A | EP 337279 A2 (HERCULES INC.),<br>18 October, 1989 (18.10.89),<br>Claims; page 4, lines 42 to 52<br>& JP 1-314164 A | 1,2,5-8,<br>10-19<br>3,4,9,20,21 |
| A | JP 10-35232 A (The Yokohama Rubber Co., Ltd.),<br>10 February, 1998 (10.02.98),<br>Full text<br>(Family: none) | 1-21 |
| A | Mitsuteru MUTSUDA et al., "Gomu to Chokusetsu<br>Karyu Secchaku Dekiru Engineering Plastic",<br>Plastics, 01 November, 2001 (01.11.01), Vol.52,<br>No.11, pages 38 to 43 | 1-21 |
| P,A | WO 02/55296 A1 (Daicel Degussa Ltd.),<br>18 July, 2002 (18.07.02),<br>Full text<br>& EP 1273433 A1      & US 2003/118839 A1<br>& JP 1-314146 A | 1-21 |

Form PCT/ISA/210 (continuation of second sheet) (July 1998)